# EUROPEAN PATENT SPECIFICATION

(11) **EP 4 005 171 B1**
(45) Date of publication and mention of the grant of the patent: **10.05.2023**
(21) Application number: 19745093.5
(22) Date of filing: 23.07.2019
(51) Int. Cl.: H04L 65/80, H04L 65/1069, H04L 65/65

(54) **INTEGRATION OF COMMUNICATION NETWORK IN TIME SENSITIVE NETWORKING SYSTEM**
INTEGRATION EINES KOMMUNIKATIONSNETZES IN EINEM ZEITSENSITIVEN VERNETZUNGSSYSTEM
INTÉGRATION D'UN RÉSEAU DE COMMUNICATION DANS UN SYSTÈME DE RÉSEAUTAGE SENSIBLE AU TEMPS (TSN)

(43) Date of publication of application: 01.06.2022
(73) Proprietor: Nokia Technologies Oy, 02610 Espoo (FI)
(72) Inventor: GAJIC, Borislava, 82008 Unterhaching (DE); SIVASIVA GANESAN, Rakash, 82008 Unterhaching (DE); MARKWART, Christian, 81667 Munich (DE); ROST, Peter, 69124 Heidelberg (DE); MANNWEILER, Christian, 81737 Munich (DE)
(74) Representative: Nokia EPO representatives
(86) International application number: PCT/EP2019/069769
(87) International publication number: WO 2021/013338

(56) References cited:
- WO-A1-2017/146701
- US-A1- 2013 138 800

## Description

### BACKGROUND

### Field

Examples of embodiments relate to apparatuses, methods, systems, computer programs, computer program products and (non-transitory) computer-readable media usable for integrating a communication network, such as a wireless communication network based on 3GPP standards, in a time sensitive networking (TSN) or Ethernet based system, and in particular to apparatuses, methods, systems, computer programs, computer program products and (non-transitory) computer-readable media usable for employing a wireless communication network part in a TSN system or Ethernet based system using a distributed configuration.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context. US 2013/138800 A1 and WO 2017/146701 A1 describe related systems of the prior art.

The following meanings for the abbreviations used in this specification apply:
- 3GPP: 3^{rd} Generation Partnership Project
- 4G: fourth generation
- 5G: fifth generation
- 5GS: 5G system
- AF: application function
- AMF: access and mobility function
- AUSF: authentication server function
- BS: base station
- CN: core network
- CNC: centralized network controller
- CP: control plane
- CPU: central processing unit
- eNB: evolved node B
- ETSI: European Telecommunications Standards Institute
- FDB: filtering database
- gNB: next generation node B
- ID: identifier, identification
- IEEE: Institute of Electrical and Electronics Engineers
- IoT: Internet of things
- LLDP: link layer discovery protocol
- LTE: Long Term Evolution
- LTE-A: LTE Advanced
- M&O: network management and orchestration
- MAC: media access control
- MMRP: multipole MAC registration protocol
- MSRP: multiple SRP
- MVRP: multiple VLAN registration protocol
- NEF: network exposure function
- NF: network function
- NG: new generation
- NRF: network repository function
- NW: network
- PDU: packet data unit
- QoS: quality of service
- RAN: radio access network
- RAT: radio access technology
- SMF: session and mobility management function
- SNMP: simple network management protocol
- SRP: stream reservation protocol
- TSN: time sensitive networking
- TT: TSN translator
- TTC: TSN translator client
- UDM: unified data management
- UE: user equipment
- UMTS: universal mobile telecommunication system
- UP: user plane
- UPF: user plane function
- VLAN: virtual local area network

### SUMMARY

The invention is defined by the appended claims. Further "embodiments" described in this description which do not fall within the scope of the appended claims shall serve as examples for a better understanding of the invention.

According to an example of an embodiment, there is provided, for example, an apparatus for use by a network element or function configured to conduct a control processing for enabling transmission of a data stream between at least one talker party and at least one listener party, the apparatus comprising at least one processing circuitry, and at least one memory for storing instructions to be executed by the processing circuitry, wherein the at least one memory and the instructions are configured to, with the at least one processing circuitry, cause the apparatus at least: to conduct control of transmission of a declaration message related to a stream reservation procedure between the at least one talker party and at least one listener party via a wireless communication network forming a bridge element of a communication system, the control comprising selecting at least one specific set of ingress and egress port pairs in the wireless communication network for declaration message propagation, wherein the at least one declaration message comprises an indication for a maximum latency acceptable for the source of the declaration message, and an indication for an accumulated latency indicating a latency provided by a signaling path the declaration message had used so far. Furthermore, according to an example of an embodiment, there is provided, for example, a method for use in a network element or function configured to conduct a control processing for enabling transmission of a data stream between at least one talker party and at least one listener party, the method comprising conducting control of transmission of a declaration message related to a stream reservation procedure between the at least one talker party and at least one listener party via a wireless communication network forming a bridge element of a communication system, the control comprising selecting at least one specific set of ingress and egress port pairs in the wireless communication network for declaration message propagation, wherein the at least one declaration message comprises an indication for a maximum latency acceptable for the source of the declaration message, and an indication for an accumulated latency indicating a latency provided by a signaling path the declaration message had used so far.

According to further refinements, these examples may include one or more of the following features:
- a control of transmission of the declaration message may be conducted by one of establishing at least one packet data unit session or quality of service flow between end points in the wireless communication network for the at least one talker party side and the at least one listener party side, modifying at least one packet data unit session or quality of service flow between end points in the wireless communication network for the at least one talker party side and the at least one listener party side, and re-using an already established packet data unit session or quality of service flow between end points in the wireless communication network for the at least one talker party side and the at least one listener party side;
- at least one of information about capabilities of terminal devices providing data to be transmitted between the at least one talker party and the at least one listener party, requirements of terminal devices providing data to be transmitted between the at least one talker party and the at least one listener party, and stream history data regarding setup or operational phase of previous streams to and from terminal devices providing data to be transmitted between the at least one talker party and the at least one listener party may be received and processed, and the processed information may be used for establishing or modifying the at least one packet data unit session or quality of service flow between the end points in the wireless communication network for the at least one talker party side and the at least one listener party side;
- end stations representing the at least one talker party and the at least one listener party may form a subset of the terminal devices;
- the at least one packet data unit session or quality of service flow between the end points in the wireless communication network for the at least one talker party side and the at least one listener party side may be specified for propagation of the declaration message;
- the accumulated latency indicating a latency provided by a signaling path the declaration message had used so far may be stored, on the basis of capabilities of resources of the wireless communication network, a latency value representing a worst-case latency for a data transmission via the wireless communication network may be determined, the indication for the accumulated latency in the declaration message may be updated on the basis of the determined latency value, and the declaration message including the updated indication for the accumulated latency may be forwarded;
- it may be monitored whether a failure indication message is provided from the side of the at least one talker party and the side of the at least one listener party, the failure indication message indicating that a latency requirement indicated by the declaration message cannot be fulfilled;
- a value for updating the indication for the accumulated latency in the declaration message may be determined by using at least one of capabilities of terminal devices providing data to be transmitted between the at least one talker party and the at least one listener party, requirements of terminal devices providing data to be transmitted between the at least one talker party and the at least one listener party, and stream history data regarding setup or operational phase of previous streams to and from devices providing services for data transmission, a comparison between the maximum latency indicated in the declaration message and an accumulated latency value accumulated on the signaling path the declaration message had used so far, and information based on failure indication messages indicating that a latency requirement indicated by the declaration message cannot be fulfilled;
- in case the at least one talker party and the at least one listener party is directly connected to an end point of the wireless communication network, the indication for the accumulated latency in the declaration message may be updated by using the maximum latency indicated in the declaration message, and the declaration message including the updated indication for the accumulated latency may be forwarded;
- it may be determined that a declaration message from the at least one listener party is provided indicating that the listener intends to receive data offered by the at least one talker party, and resources of the wireless communication network, for a packed data unit session or a quality of service flow, required for transmission of the data between the at least one talker party and the at least one listener party may be setup or modified;
- the declaration message may be forwarded from the at least one listener party to the at least one talker party by using ports in the wireless communication network which are used for a previous transmission of the declaration message from the at least one talker party to the at least one listener party;
- setup or modification of the resources on the basis of a latency value used for updating an indication of the accumulated latency may be triggered;
- it may be determined whether declaration messages from a plurality of listener parties are provided, if the determination is affirmative, the plurality of listener parties may be merged into one common declaration message, and the common declaration message may be forwarded to the at least one talker party side;
- it may be determined that a latency requirement of the at least one talker party or the at least one listener party is not fulfilled, forwarding of a declaration message including an indication that the latency requirement is not fulfilled to the at least one talker party may be postponed, and it may be checked whether a modification of resources of the wireless communication network is possible for reducing a latency caused by the wireless communication network in a data transmission between the at least one talker party and the at least one listener party;
- in case the check results that a modification of resources of the wireless communication network is possible, a reduced latency value available in the wireless communication network may be determined, the indication for the accumulated latency in the declaration message may be updated on the basis of the determined reduced latency value, and an updated declaration message including the updated indication for the accumulated latency may be sent back to the at least one listener party by which it was indicated that the latency requirement of the at least one talker party or the at least one listener party is not fulfilled;
- in case the check results that a modification of resources of the wireless communication network is not possible, the declaration message including the indication that the latency requirement is not fulfilled may be forwarded to the at least one talker party;
- the wireless communication network may form a bridge element for a time sensitive networking system or Ethernet based networking system, wherein a device forming a mobile terminal element or function or a user equipment element or function of the wireless communication network may represent one end point of the bridge element being connectable with at least one end station or another bridge element of the time sensitive networking system or Ethernet based networking system, and a core network element or function of the wireless communication network may represent another end point of the bridge element towards another end station or another bridge element of the time sensitive networking system or Ethernet based networking system,
   wherein a network-side translator element or function may be connected to or part of a core network element or function of the wireless communication network and a device-side translator element or function may be connected to or part of the device forming a mobile terminal element or function or a user equipment element or function, and wherein the apparatus may be connected to or part of at least one of the network-side translator element or function, the device-side translator element or function, and a core network element or function of the wireless communication network;
- the wireless communication network may be based on a 3GPP standard.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some embodiments of the present disclosure are described below, by way of example only, with reference to the accompanying drawings, in which:
Fig. 1 shows a diagram illustrating an example of a deployment of a wireless communication network in a TSN system architecture;
Fig. 2 shows a signaling diagram illustrating a procedure related to propagation of a declaration message according to some examples of embodiments;
Fig. 3 shows a signaling diagram illustrating a further procedure related to propagation of a declaration message according to some examples of embodiments;
Fig. 4 shows a signaling diagram illustrating a further procedure related to propagation of a declaration message according to some examples of embodiments;
Fig. 5 shows a signaling diagram illustrating a further procedure related to propagation of a declaration message according to some examples of embodiments;
Fig. 6 shows a flow chart of a control processing according to some examples of embodiments; and
Fig. 7 shows a diagram of a network element or function representing a stream reservation control element or function according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Basically, for properly establishing and handling a communication between two or more end points (e.g. communication stations or elements, such as terminal devices, user equipments (UEs), or other communication network elements, a database, a server, host etc.), one or more network elements or functions (e.g. virtualized network functions), such as communication network control elements or functions, for example access network elements like access points, radio base stations, relay stations, eNBs, gNBs etc., and core network elements or functions, for example control nodes, support nodes, service nodes, gateways, user plane functions, access and mobility functions etc., may be involved, which may belong to one communication network system or different communication network systems.

New communication systems, such as the 5G System (5GS), are developed in order to support new business models such as those for loT and enterprise managed networks. Services such as unmanned aerial vehicle control, augmented reality, and factory automation are intended to be provided. Network flexibility enhancements support self-contained enterprise networks, installed and maintained by network operators while being managed by the enterprise. Enhanced connection modes and evolved security facilitate support of massive IoT, expected to include tens of millions of UEs sending and receiving data over the 5G network.

As indicated above, one use case is factory automation which is also referred to as vertical industries (i.e. Industry 4.0). Vertical industries are related to e.g. discrete automation, process automation, and intelligent transport systems in industrial factories or the like. Design principles concern several aspects, such as, for example, interconnection, i.e. the ability of machines, devices, sensors, and people to connect and communicate with each other via IoT, information transparency, i.e. the provision of operators with useful information needed to make appropriate decisions from all points in the manufacturing process, technical assistance, i.e. the ability of assistance systems to support humans by aggregating and visualizing information comprehensively for making informed decisions and solving urgent problems on short notice, and the ability of cyber physical systems to physically support humans by conducting a range of tasks, and decentralized decisions, i.e. the ability of cyber physical systems to make decisions on their own and to perform their tasks as autonomously as possible.

Cyber-physical systems are to be understood as systems that include engineered, interacting networks of physical and computational components. Cyber-physical control applications are to be understood as applications that control physical processes. Cyber-physical control applications in automation follow certain activity patterns, which are open-loop control, closed-loop control, sequence control, and batch control

Communication services supporting cyber-physical control applications need to be ultra-reliable, dependable with a high communication service availability, and often require low or (in some cases) very low end-to-end latency. Communication in automation in vertical domains follows certain communication patterns. One example for such a communication pattern is a periodic deterministic communication.

As described above, communication systems employed in applications like vertical industries have to fulfill certain requirements, such as high communication service availability and low end-to-end latency. In order to provide such capabilities, mechanisms for Time Sensitive Networking (TSN) as defined by IEEE are integrated with 5GS. TSN is currently standardized as the mechanism for communication within industrial networks. A set of IEEE 802.1 protocols (IEEE 802.1AS-Rev, 802.1 CB, 802.1Qcc, 802.1Qch, 802.1Qci, 802.1Qcj, 802.1CM, 802.1Qcp, 802.1Qcr, 802.1AB) is applied to achieve deterministic data transmission.

That is, TSN (or Time Sensitive Communication (TSC)) refer to a communication service that supports deterministic communication and/or isochronous communication with high reliability and availability. It is about providing packet transport with bounds on latency, loss, packet delay variation (jitter), and reliability, where end systems and relay/transmit nodes can be strictly synchronized.

Currently, in industries, TSN is used as a mechanism to provide end to end connectivity with deterministic capacity and delay. The talkers (e.g., sensors, controllers) and listeners (e.g. controllers, actuators) are connected through bridges using fixed connection lines, such as cables.

TSN proposes three configuration models, i.e. fully centralized, distributed and hybrid (distributed user centralized network). In the centralized approach, TSN has a centralized entity, named CNC (Centralized Network Controller or Centralized Network Configuration ), which collects the requirements of end to end communication between the Talker End Stations and Listener End Stations and performs scheduling centrally. Bridges learn the connection information for their immediate network peer in each physical port using link layer related data, such as, for example, using the link layer discovery protocol (LLDP). The CNC calculates schedules, paths etc. in order to fulfil the stream QoS requirements, and it provides the schedule to each bridge using respective bridge managed objects.

On the other hand, in the distributed TSN approach, bridges conduct self-management, i.e. control by a centralized entity is not provided.

It is to be noted that the bridges are time-aware in a TSN network. There may be one or more bridges between a talker end station and a respective listener end station. In the following, some examples are based on the assumption that two bridges are provided between talker and listener, but other examples and configurations are also applicable, e.g. where only one bridge or three or more bridges are involved. Each talker end station may talk to one or more listener end stations, and each listener end station may listen to one or more talker end stations. A listener end station of one communication may be a talker end station of another communication.

In a main target scenario, the tactile industrial network, also known as Industrial IoT (IIoT) or Industry 4.0 networks, 3GPP technologies are applied in addition to wired time sensitive networking (TSN) in industrial environments to provide flexibility (in terms of mobility) and scalability (in terms of number of sensors or actuators).

The introduction of wireless devices provides more flexibility, cost effectiveness and scalability in the system, but requires for example a wireless network as defined by 3GPP to provide predictable QoS for the communication. TSN and 3GPP networks are developed and standardized as two disjoint domains which are managed independently.

For implementing the 5GS part into TSN, an approach can be used in which the 5GS appears as a TSN bridge. Basically, 5GS overall adopts a QoS framework where applications request QoS properties that the 5GS then meets using 5G QoS framework. When the 5GS appears as a TSN bridge, the 5G system receives TSN related reservation requests using the known 5G QoS framework. The 5G system then uses 5G internal signaling to satisfy the TSN reservation request.

For example, there are three TSN configuration models, i.e. a so called (fully centralized model, a distributed model and distributed user centralized network model, which can be supported e.g. by 5GS.

Solutions developed so far for 3GPP-TSN integration are mainly evolved around the assumption that the centralized configuration models will be dominantly used. However, many of the use cases (e.g. lower number of devices, less critical time constraints) do not require centralized configuration entities and can also be implemented by using a distributed configuration approach.

Therefore, 3GPP-TSN integration solutions have to be applicable regardless of the configuration model used in TSN, including the fully distributed model.

For a distributed configuration model, SRP (Stream Reservation Protocol) is utilized in TSN. SRP implements admission control and defines the concept of streams at L2. Also provided is a mechanism for end-to-end management of the streams' resources, to guarantee QoS. Listeners indicate what streams are to be received, Talkers announce the streams that can be supplied by a bridged entity. From these primitives the resources are allocated and configured in both the end nodes of the data stream and the transit nodes along the data streams' path. An end-to-end signaling mechanism to detect the success/failure of the effort is also provided.

That is, when using SRP, the stream source end station (Talkers) indicate stream requirements before transmitting the actual stream data. Such requirements are indicated to the network using so called "Talker Advertise" declarations (also referred to hereinafter as talker declaration). In this declaration, a worst-case latency indicator is provided. The Talker Advertise declaration is propagated by bridges on the path towards potential Listeners as long as the stream requirements can be met by individual bridges. During the propagation of Talker advertise declarations, the accumulated latency is updated at each hop/bridge. In such way, Listeners can have the information about the worst-case latency. The Listener can use this information to decide if the latency is too large for acceptable reception of the stream.

For example, the accumulated latency grows by the *portTcMaxLatency* value for the bridge, which represents the worst-case latency that the bridge could add to the total packet latency. The *portTcMaxLatency*: per hop is equal to the sum of the following:
a) (equal or higher priority traffic) the time required to empty the queue in which frames of that priority are placed, if that queue and all higher priority queues are full;
b) (lower priority traffic) the time required to transfer one lower priority frame of maximum size that could have just started transmitting as the current priority frame was queued up;
c) (internal processing) the worst-case time required by the Bridge to transfer a received frame from the input port to the output queue;
d) (wire propagation time) the time required for the first bit of the frame to propagate from the output port to the receiving device;
e) (media access delay) the time required to wait for the media to become available for transmission.

Listeners receiving Talker Advertise declarations and willing to receive the stream data send back a specific message, i.e. a "Listener Ready" declaration (also referred to hereinafter as listener declaration) to the Talker. During the propagation of this message the bridges reserve the resources needed to deliver the stream data. When the Talker receives a Listener Ready declaration, it starts transmitting the stream.

It is to be noted that there are also defined additional attributes in SRP messages which provide an optional mechanism to Talkers and Listeners to define their requirements towards the network, i.e. *UserToNetworkRequirements* attribute. Such an attribute can be used to express the requirements on maximum latency that the Talker and/or Listener require for a particular stream. The maximum latency specified by a Talker applies for all Listeners of that stream, whereas the maximum latency specified by Listener applies solely to that Listener. The Bridges can compare the max latency requirements with an indication of the latency being accumulated so far on the transmission path (i.e. from the end station via other hops/bridges), which is also referred to as the *AccumulatedLatency* indicated in the declaration message. Such comparison is done separately for Listener and Talker. In the case that *AccumulatedLatency* exceeds the maximum latency of the Talker, the bridge changes the Talker Advertise to a failure message also referred to as "Talker Failed" declaration (for example, a failure code 21 (max latency exceeded) can be provided). It is to be noted that a similar comparison is done for Listeners.

Once such a failure (or alternatively any other type of failure indicated by e.g. another code) occurs, a *FailedInterfaces* value in SRP messages can be used to provide a list of one or more physical interfaces (i.e. ports) in the failed bridge or end station. This is used, for example, for locating interfaces in the physical topology from which the failure originates.

SRP utilizes three signalling protocols, i.e. MMRP, MVRP and MSRP, in order to establish stream reservations across a bridged network. While MMRP and MVRP are mainly used to control the propagation of end station declarations, MSRP is a signalling protocol that enables the reservation of network resources that will guarantee the transmission and reception of data streams across a network with the requested QoS.

When integrating a wireless communication network, such as a 3GPP based network, into a TSN network structure, the wireless communication network shall be transparently integrated with a TSN network. In other words, the TSN networks assumes the wireless network part as being just one further bridge, which means that the 3GPP network is modeled as a TSN bridge (further also referred to as '3GPP bridge' or 5GS Bridge). The TSN network can interact with this bridge in a manner as defined e.g. in IEEE 802.1Q specifications. Thus, the 3GPP network provides wireless connectivity service to the TSN network in a transparent way.

However, as indicated above, for the 5GS integration with TSN in a fully distributed configuration model it is necessary that the 5GS bridge is adapted for self-management. This comprises the support for SRP, reservation of bandwidth required for streams, updating the messages sent by Talker and Listener, etc. For example, as described above, when using SRP, the end station behaving as a Talker sends "Talker Advertise" declaration in order to inform about the stream(s) it can provide. Bridges, including the 5GS Bridge, have to propagate such a message through the network and update the field that indicates the accumulated latency. The Listener interested in receiving the stream with given characteristics (including the accumulated latency) will send back the declaration message towards the Talker.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks where mobile communication principles are integrated with TSN communications, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

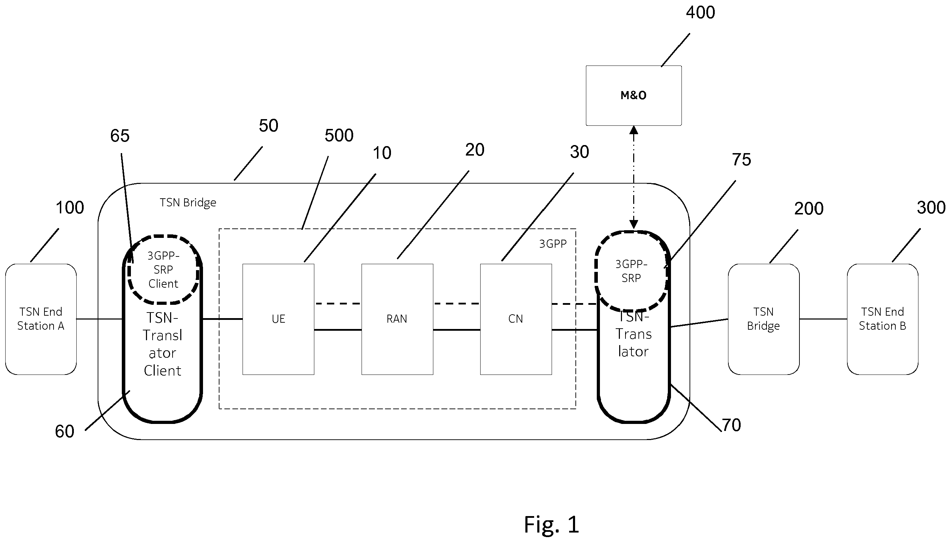

According to some examples of embodiments, measures for integrating a wireless communication system based, for example, on 3GPP standard, into a TSN or other Ethernet based system are described, wherein the TSN or other Ethernet based system uses any configuration, in particular a distributed configuration as described above. Principles of such an integration are described in the following on the basis of a configuration as shown in Fig. 1.

According to Fig. 1, a TSN End Station "A" 100 and a TSN End Station B 300 represent potential parties of a communication via a TSN system by means of a time sensitive communication link. The TSN system comprises one or more bridges (Fig. 1 shows 2 bridges 50 and 200, wherein TSN bridge 50 includes a wireless communication network part using a wireless communication services based on 3GPP technologies, such as a 5GS based network. For linking the TSN bridge 50 (formed by the wireless communication network part 500) to the other parts of the TSN system, such as an end station or another bridge, a TSN Translator (TT) 70 and a TSN Translator Client (TTC) 60 which acts on behalf of the TT are introduced as a functionality to integrate a wireless communication network into the TSN network domain in a transparent manner. That is, to the TSN network, the wireless communication service of a wireless communication network acts like any other TSN bridge (e.g. as bridge 200), while the TSN network acts as e.g. a data network to the wireless communication network.

It is to be noted that while in the following a translator element or function, in particular a TSN translator element or function, and a translator client element or function, in particular a TSN translator client element or function are described, also other elements having comparable functions are applicable in the same manner. For example, in 3GPP, functions like a so-called network-side TSN translator (NW-TT) and a so-called device-side TSN translator (DS-TT) are defined, which are responsible for translation between TSN and 3GPP domains, similar to the TSN translation (TT) and TSN translator client (TTC) element, for example. For example, the DS-TT maps to a TTC, while the TT has a UP part which is defined as part of UPF and named NW-TT, and the CP part which is called TSN AF (TSN Application function).

In Fig. 1, the entities of the TSN network are shown by round edged boxes and those of the 3GPP network are shown by sharp edged boxes. The wireless network part is simplified by showing a UE 10, a RAN 20 and an CN 30 which constitute the 3GPP network 500 which in turn is enclosed within a dashed line box. The solid lines connecting the entities represent the data plane and the dotted lines the control plane. The TT 70 and the TTC 60 shown by bold rounded boxes enable the transparent integration of the TSN network and the 3GPP network. The round edged box 50 consisting of TT 70, TTC 60, and 3GPP network 500 constitute the logical TSN bridge 50 formed on top of the 3GPP network.

Also shown in Fig. 1 is a network management and orchestration entity (M&O) 400 which is used for managing the network, for example, or represents a network engineering tool. The M&O 400 provides data for processing conducted according to some examples of embodiments (later described). The M&O 400 includes, for example, management concept and architecture, provisioning, network resource model, fault supervision, assurance and performance management, trace management and virtualization management aspects.

As shown in Fig. 1, the TSN End Station A 100 is connected to UE 10 via the TTC 60. The UE 10 is responsible to establish and handle the wireless connection service for the TSN End station A 100. The wireless connection service contains beside the wireless link between UE 10 and RAN 20 also essential CN services to provide for example authentication, mobility, QoS, etc.

For the transparent usage of the wireless connection service and to hide specific behavior of the 3GPP network to the TSN network and vice versa, the TT/TTC functions are used which work as a respective intermediator between both domains, i.e. it understands the TSN protocol and maps the TSN network messages into control and user plane messages of the 3GPP network to trigger corresponding actions in the 3GPP network, e.g. to trigger the establishment of a wireless connection with guaranteed QoS, and vice versa. Furthermore, the TT/TTC take care of services like the enforcement of priority classes for the traffic, frame translation, gate schedules etc. which are typically offered by the bridges in the wired network to guarantee deterministic communication. In this view, the TT 70 and TTC 60 are placed on both sides of the 3GPP network, the network (CN) side and the UE side.

The TT and the TTC are logically part of the same translation between 3GPP and TSN network and hence, according to examples of embodiments, they do not act independently. Treating them as one entity allows to hide the TSN translator at the UE side to the TSN system and to use the TSN translator at the CN side to represent the complete 3GPP network as a TSN bridge to the TSN system. The TT (or NW-TT, for example) performs the major part of the translation of the TSN protocols to 3GPP commands and procedures and vice versa. The TTC 60 at the UE side acts on behalf of the TT 70 at the CN side and is therefore called TSN translator client (or DS-TT, for example).

The integration of the TSN translator with the TSN network is done, for example, by implementing the protocols for an TSN bridge, the TSN Ethernet protocol to exchange messages between a TSN bridge with another TSN Ethernet bridge or TSN End Station (user plane traffic, also called data traffic) and the protocol to exchange information with possible control elements of the TSN (e.g. CNC) (control plane).

According to some example, 3GPP network interfaces provide a set of functions which are defined for a specific 3GPP release. Therefore, the TT 70 as well as the TTC 60 are designed to adapt to respective new releases. As long as a 3GPP release is not closed, 3GPP may introduce additional interfaces or adaptations to interfaces or even new functional entities which allows for optimizing or simplifying respective handling of the communication for TSN networks. An example for such an adaptation is the introduction of the new PDU session type "Ethernet" to handle Ethernet traffic. The TT 70 as well as the TTC 60 hide the release specifications to the TSN network. The same is valid for the 3GPP network when the TSN network introduces new functions and interface modifications.

It is to be noted that the TSN End Stations A and B may be, for example, a sensor, controller, actuator or any other industrial device. Furthermore, the UE 10, which is shown in Fig. 1 as a separate entity, may be integrated in the End Station A or may be plugged into the TSN end station A. The UE 10 represents either an ingress port (UL communication direction) or an egress port (DL communication direction) for the TSN based communication.

Similarly, the TTC 60 may also be an integrated part of TSN end station A 100, the UE 10, or both.

Generally, any network function of the communication network can be implemented as a network element on a dedicated hardware, as a software instance running on a dedicated hardware, or as a virtualized function instantiated on an appropriate platform, e.g., a cloud infrastructure.

The CN 30 shown in Fig. 1 may comprise various elements or network functions. For example, the CN NFs comprises e.g. access and mobility functions (AMF), session management functions (SMF), policy control functions (PCF), network exposure function (NEF), user data management (UDM), user plane functions (UPF), application functions (AF) etc. Depending on the network architecture used for the wireless communication network, additional or alternative elements or functions can be provided.

As indicated above, in a configuration as shown in Fig. 1, TT 70 and TTC 60 work as a respective intermediator between both domains, i.e., the TSN translator understands the TSN protocol and the 3GPP protocols and maps the TSN commands and messages into corresponding actions and messages in a 3GPP network providing 5G and vice versa.

According to some examples, two key types of information messages are differentiated by the TSN Translator:
1) The network configuration related messages of the TSN network will be denoted in the following by the term control plane (CP) in order to be consistent with the naming convention of mobile network terminology. The CP messages, e.g. LLDP messages are converted into the corresponding control plane messages and procedures in a 3GPP network. The control plane messages and procedures are used to establish for example a packet data unit (PDU) session or a service flow (QoS flow) and to provide for example required QoS parameters for the service flow within the PDU session. The TSN translator has an interface to respective 3GPP functional entities of the core network (CN), e.g. PCF of a 5G network, which interacts directly or indirectly with further 3GPP CN functional entities like SMF and AMF. The TSN translator acts from the 3GPP network point of view as application function (AF). In addition, the TSN translator derives information provided by its TSN translator client and the AF and/or PCF to act as a TSN bridge in the TSN network. A typical example is the LLDP required at a TSN bridge to be interoperable with the TSN network.
   Alternatively, other options may be used to interact between 3GPP CN and TSN translator. For example, according to examples of embodiments, the TSN translator provides an interface to the NEF when authentication and authorization features are needed. Alternatively, a new functional entity in 3GPP domain could be created which provides the functionality of the TSN Translator in a standardized way. SBI (service based interfaces) may also be used to realize interfaces to the TSN Translator function.
2) For the transmission of data between the End Station A and an end station connected via the TSN system, the TSN translator has an interface to the UPF and the corresponding interface to the TSN bridge that connects to the TSN end station, which is denoted in the following by the term user plane (UP), again to align with the terminology applied in 3GPP networks. The UP of the TSN translator may act as a data network to the 3GPP network. On the other side, for an adjacent TSN Bridge or a TSN End Station, it looks like a TSN bridge. With respect to the user plane functionality, according to some examples of embodiments, the TSN translator offer among others the following functions:
   a. Removes the header information from frames or packets received at UPF and create the corresponding TSN frame or packet
   b. Maps the frames or packets received in a particular PDU session to the packets to be transmitted from the corresponding egress port
   c. Depending on the QoS flow of the given PDU session, place the frame or packet in the corresponding priority queue of a specific port
   d. Based on the gate control list (e.g. specified by the CNC in the centralized configuration), it shall transmit the frames or packets from one of the different queues through the egress port. The gate control list specifies at which time interval a frame or packet from a specified priority queue can be transmitted at a particular egress port.
   e. If the frame or packet arrives delayed such that the gate control for this frame or packet in the current interval is already closed, then this frame or packet shall be dropped and not transmitted.
   f. Shall introduce guard band between the transmission intervals
   g. Shall pre-empt the Ethernet frames or packets, which started its transmission in the previous time interval, in order to make the port be available for the frames or packets scheduled to be transmitted at the current time interval

Similar translation shall be performed when the TSN frames or packets arrive at the TSN translator ingress ports. The priority queues shall be implemented at the translator or the translator client or both.

The UP part of the TSN Translator is realized either as:
a. UPF with extended TSN functionality: In this case, both UPF and TSN Translator UP are within a single box and intermediation between the UPF protocol and the TSN protocol is performed internally or
b. UPF and TSN translator UP act as two separate entities: In this case, interface between them may be a proprietary interface or the N6 interface as defined by 3GPP is extended to support the TSN capabilities

Similar to the TSN Translator, CP and UP translation is performed by the TSN Translator Client. The TSN Translator Client works on behalf of the TSN Translator so that the TSN Translator Client, 3GPP network and TSN Translator together appear to be a TSN bridge for the TSN network and the TSN end station A. The TSN translator client offers a blocked security port to the TSN end station A, so that the TSN end station A can send authentication related messages to the TSN system.

The following functions are provided by the TSN translator (TT 70 and its TTC 60) together with the 3GPP network to achieve transparent integration in the TSN network:
1. The TT 70 and its TTC 60 are enabled to initiate PDU sessions and QoS flows with a set of pre-defined QoS parameter, e.g. 5G QoS indicator (5QI), in the 3GPP network, which are used to exchange information between TSN Translator Client and TSN Translator. The PDU sessions and respective QoS flows are used to transport information between:
   [1] TSN end station A and a controller element, if provided (e.g. TSN CUC) (e.g. for authentication and authorization)
   [2] TT and its TTC (e.g. LLDP)
   [3] TSN end station A and other TSN end station (e.g. measurement data from a sensor to a controller)
2. The UE 10 connected to the TTC 60 establishes the wireless connection to the 3GPP CN domain, based on standardized 3GPP authentication and authorization procedures. The TTC 60, which is connected to the UE 10 may provide additional credentials allowing to check if the UE 10 and TTC 60 together are authorized to establish a wireless connection. Optionally, the TTC 60 provides further credentials of the connected TSN end station A that is added to the credentials.
3. The 3GPP network allows to establish additional PDU sessions and QoS flows for existing and/or the new PDU sessions with a set of pre-defined QoS parameter (e.g. 5QI), which is controlled by a Policy Control Function PCF, optionally considering information provided by the TSN Translator and its TSN Translator Client on required minimum or average throughput, traffic pattern (e.g. cyclic data), maximum or average allowed packet loss, maximum or average latency, and jitter. A typical PDU session would define a maximum delay (10ms) and further information, which needs to be guaranteed with high probability (99.999%) and minimum guaranteed bit rate (less than 1 Mbps). The information may be derived from information provided by the TSN network.
4. The TT 70 and its TTC 60 support the Link Layer Discovery Protocol (LLDP) and participates in a network discovery procedure. The PDU session and the QoS flow represent the connection between the UE 10 and the UPF. This information is mapped to TSN bridge managed object's (BMO) parameters, which are then reported by the TT 70 (and to a controller, if necessary, e.g. a TSN CNC).
5. The TT 70 and its TTC 60 have at least one of the following functions:
   [1] Mapping of control plane information from the TSN network and the TSN end stations to 3GPP control plane information;
   [2] Mapping of control plane information from the TSN network and the TSN end stations to information exchanged between TT 70 and its TTC 60;
   [3] Mapping of control plane information from the 3GPP network to information exchanged between TT 70 and TTC 60, and TSN network and the TSN end stations;
   [4] Handling of TSN user plane, including scheduled gating at the egress port;
   [5] Handling of Time Synchronization in the TSN network;
   [6] Access control for TSN end station.
6. The 3GPP network may provide multiple PDU sessions for the UE 10 connected to the TTC to realize at least one wireless connection in the 3GPP network. Each PDU session may contain multiple QoS flows with a defined set of QoS parameters for each. The TT and its TTC maps each QoS session and its QoS parameters to TSN Bridge managed object's (BMO) parameters and reports them to the TSN CNC to allow more flexible options for the computed schedule.

As described above, according to some examples of embodiments, for integrating the wireless communication system (in the following, a 3GPP and specifically a 5G based network is assumed) a TSN (or Ethernet based) system including a distributed configuration as described above, it is necessary to support SRP in the 5GS bridge shown e.g. in Fig. 1, in order to enable the propagation of Talker/Listener declarations within the 5G network as well as the adequate resource management within 5GS.

That is, according to examples of embodiments, measures are provided which allow to control the propagation of messages, such as Talker and Listener declarations as well as actual stream data transmission through the 5GS Bridge so as to enable the establishment of required TSN streams between Talker(s) and Listener(s) while minimizing the amount of resources used within 5GS. For this purpose, for example, PDU sessions and QoS flows suitable for the propagation of Talker and Listener declarations are established, wherein corresponding ports within the 5GS bridge are (pre-)configured in a way to allow forwarding of declarations with selected destination addresses, and to enable back-propagation of declarations from Listener(s). Moreover, failure indications such as "Talker Failed" or "Listener Failed" messages, e.g., in case an accumulated latency exceeds defined thresholds, are processed.

Furthermore, a value for latency that is to be added to the *AccumulatedLatency* field in the Talker Advertise declaration message to be propagated towards the Listener is estimated. In this connection, the possibility of the 5GS to set up different QoS flows with different QoS characteristics including guaranteed latency as well as the fact that the resulting accumulated latency is one of the deciding factors for the final stream setup between Talker and Listener(s) are considered.

According to examples of embodiments, corresponding measures allowing to conduct a control enabling the transmission of a data stream between the Talker(s) and the Listener(s) are provided by means of a so-called 3GPP-SRP function. The 3GPP-SRP function according to examples of embodiments enables the self-management of a 5GS Bridge according to the TSN distributed configuration model.

As shown in Fig. 1, the 3GPP-SRP function complements the TSN Translator functions (network and UE side). This is shown in Fig. 1 by reference signs 65 and 75, which denote a 3GPP-SRP function and 3GPP-SRP Client function. The 3GPP-SRP functions 65 and 75 enable the support of SRP and the distributed TSN configuration model by a 5GS acting as a TSN Bridge ("5GS Bridge"). Alternatively, other parts of the communication network can be used for accommodating the 3GPP-SRP function, such as a core network element or function, the UE or the like.

Basically, according to examples of embodiments, the following functionalities 1 to 4 are comprised within the 3GPP-SRP function 65 or 75:
1. Bridge resource management and ports configurations.
   By means of this, it is possible to use a minimal amount of resources of the wireless communication network for propagation of e.g. SRP declarations through the 5GS Bridge. In detail, this comprises a control of the distribution of declaration messages (e.g. Talker Advertise declarations) in such a way that they are only forwarded on a selected set of egress ports. By means of this, it is prevented that Talker Advertise or Listener Ready declarations are propagated on all ports of 5GS bridge. That is, the 5GS Bridge is configured by the 3GPP-SRP function 65 or 75 to allow the propagation of e.g. Talker and Listener declarations on ingress/egress port pair(s) which are needed to transmit frames or packets between identified Talker(s) and Listener(s).
   Furthermore, the connectivity within the 5GS bridge is enabled such that the propagation of SRP declarations between Talkers and Listeners can be done at corresponding (ingress, egress) port pairs. This implies, for example, an establishment or modification of at least one PDU session per UE (UE 10) to which the Talker(s) (and/or Listener(s)) are connected (it is to be noted that the PDU session models the port at the UE and the port at the corresponding UPF). Corresponding PDU sessions are to be used for propagation of SRP declarations between Listeners and Talkers connected to the respective ports (at UEs and UPF) of the 5GS bridge. Alternatively, an existing PDU session/QoS flow can be re-used, if already established, for a pair of TSN Translator functions on the network and UE side (i.e. the TT 70 and the TTC 60, for example). It is to be noted that the PDU sessions used for transmission of SRP messages can simultaneously be used for transmission of other information, e.g. LLDP information, non-TSN user traffic, etc.
2. Calculation/estimation of suitable capabilities of 5GS Bridge to be declared during the SRP declaration propagation and included in the declaration messages (in other words a value representing the latency caused by the 5GS bridge which is to be added to the *AccumulatedLatency* field of the Talker declaration message, for example).
3. Setup or modification of PDU sessions/QoS flows with adequate QoS characteristics once the resources are actually required. That is, only when an acknowledgement from the Listener (i.e. a Listener Ready declaration, for example) to receive the Talker's stream is propagated backward, the corresponding resources in the 5GS bridge are prepared. By means of this, resource pre-reservations are avoided.
4. Modification of existing PDU sessions/QoS flows (or alternatively setup of a different PDU session/QoS flow) within the 5GS Bridge on demand. For example, when stream transmissions with more demanding QoS requirements are detected, this allows for dynamically updating the Talker declaration messages to support such stream transmissions.

That is, according to examples of embodiments, a function referred to as 3GPP-SRP function is introduced which enables, for example, the 5GS to handle SRP protocol used in distributed TSN configuration model in a way which optimizes the resource usage of 3GPP network while providing the performance required to support the TSN streams within 3GPP network. That is, the 3GPP-SRP function according to examples of embodiments enables the self-management of 5GS Bridge according to the TSN distributed configuration model, considering TSN stream requirements as well as supporting procedures defined by the SRP, comprising handling of SRP procedures during the Talker declaration propagation, Listener declaration propagation as well as supporting the TSN stream transmission.

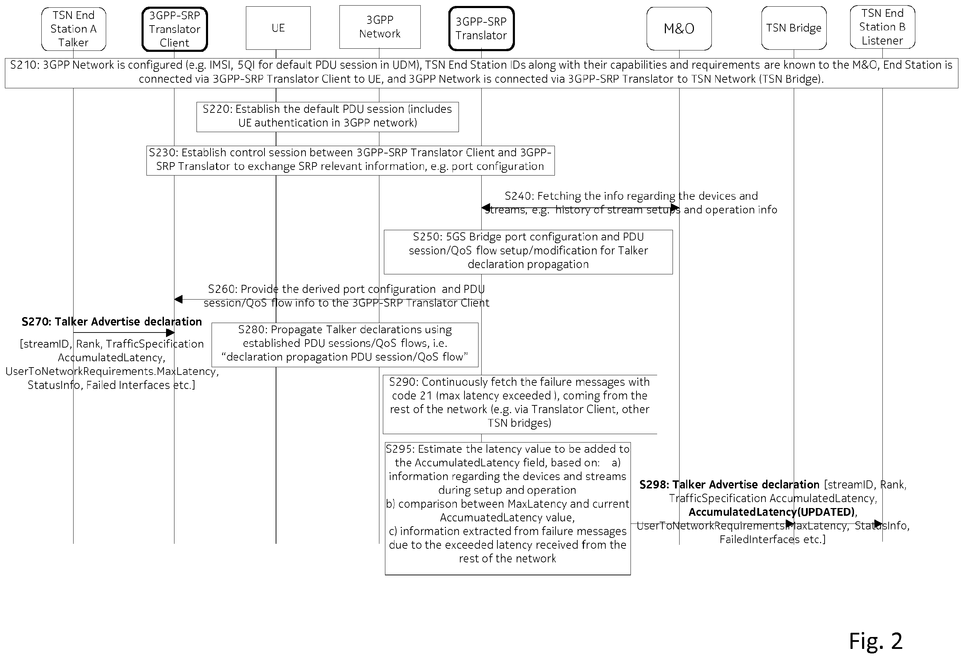

In the following, processing details regarding the above described points 1 to 4 are described in connection with Figs. 2 to 4, which are based on the system configuration shown in Fig. 1.

Fig. 2 shows a signaling diagram illustrating a procedure related to propagation of a declaration message according to some examples of embodiments. Specifically, Fig. 2 is related to above indicated points 1 and 2, i.e. the 5GS Bridge resource management and ports configurations and a calculation/estimation of suitable capabilities of the 5GS Bridge.

First, with reference to Fig. 2, a 5GS procedure for a Talker Advertise declaration message propagation in a distributed configuration model following SRP is explained.

First, in S210, the 3GPP Network is configured. For example, IMSI, 5QI for default PDU session in UDM are configured. Furthermore, TSN End Station IDs (i.e. end stations 100 and 300) along with their capabilities and requirements are indicated to the M&O 400 and stored therein. The TSN End Station A 100 is connected via 3GPP-SRP Translator Client 60, 65 to UE 10, and the 3GPP Network is connected via 3GPP-SRP Translator 70, 75 to the TSN Network (here, to TSN Bridge 200).

Then, in S220, a default PDU session is established in the 3GPP network. This procedure includes, for example, UE authentication in the 3GPP network with the CN 30.

In S230, a control session between the 3GPP-SRP Translator Client 60 and 3GPP-SRP Translator 70 is established. Thus, SRP relevant information, such as port configuration information, can be exchanged between the TT and the TTC.

According to the present example, the 3GPP-SRP Translatorfunction 75 derives suitable port configuration (e.g. rules on forwarding or filtering Talker declarations and corresponding Listener declarations with certain destination address and VLAN ID). It is to be noted that such filtering and forwarding rules can be defined in databases, such as filtering database (FDB), which contains filtering which is either a) static, and explicitly configured by management entities; or b) dynamic and is updated by the bridge operation and the protocols it supports.

In the present example, the 5GS Bridge (i.e. 3GPP-SRP Translator function 75) is able to make such pre-configuration on the basis of information derived in S240, in which information about available devices (specifically, end stations of the TSN network) and their capabilities/requirements are obtained. Furthermore, stream history information, which are stored e.g. during a setup phase and an operational phase is provided. The corresponding information is available at the M&O functions 400, as indicated in S210. For illustrating the above described situation, the following example is useful. For example, if a newly added end-device is a temperature sensor which is deployed on top of existing temperature sensors in order to support the remote process automation in a factory the advertisement from such a sensor should be forwarded in a way to reach the same actuator (i.e. listener end station) collecting other temperature measurements from other sensors which were deployed beforehand. Based on the information on the end device (e.g. that it is a temperature sensor which reports the temperature every x seconds similar to other temperature sensors involved in process monitoring) as well as the stream history (e.g. the information on previously set-up streams from other similar temperature sensors on e.g. the Listener info), the 3GPP-SRP Translator 75 is able to act accordingly.

When having obtained the information in S240, the 3GPP-SRP Translator function 75 conducts the 5GS Bridge port configuration and PDU session/QoS flow setup/modification for Talker declaration propagation in S250. That is, the 3GPP-SRP Translator 75 triggers the setup or modification of a PDU session/QoS flows to be used for Talker/Listener declarations ("declaration propagation PDU session/QoS flow") and derives the corresponding port configurations.

Corresponding information is provided to the 3GPP-SRP Translator Client 65 in S260.

It is to be noted that as an alternative, an existing PDU session can be used for forwarding information between a pair TSN Translator-TSN Translator Client. Furthermore, it is to be noted that the PDU sessions used for transmission of SRP messages (i.e. the declaration messages) can be also used for transmission of other type of information, such as LLDP messages, etc.

Now, with reference to Fig. 2, when the Talker Advertise declaration message propagation is prepared, the calculation/estimation of suitable capabilities of 5GS Bridge is described.

In S270, the TSN end station A 100 transmits, as a Talker, a Talker Advertise declaration which includes, for example, a streamlD, a rank, a traffic specification, an information field indicating an accumulated latency, a UserToNetworkRequirements.maximum latency indication, status information, information about failed interfaces etc.

In S280, the 3GPP-SRP Translator client function 65 of the TTC 60 (to which the TSN end station A 100 is connected, see Fig. 1) starts propagation of the Talker declaration towards the 3GPP-SRP Translator function 75 by using the established PDU sessions/QoS flows, i.e. the declaration propagation PDU session/QoS flow.

It is to be noted that resources required for the declaration propagation, such as the QoS characteristics/capabilities of "declaration propagation PDU session/QoS flow", may be lower compared to the characteristics/capabilities of the PDU sessions/QoS flows that are finally set up and used for actual stream data transmission. Due to this, it is possible to save resources at the 5GS by avoiding the setup of QoS flows with high QoS characteristics/capabilities for a sole declaration propagation (e.g. Talker Advertise, Listener Ready declarations), which, depending on the Listeners' demand as well as the capability of the rest of the bridges on the path, may not even result in actual stream transmission.

In S290, the 3GPP-SRP Translator 75 continuously fetches failure messages coming from the rest of the network (e.g. via TTC 60, other TSN parts such as the TSN bridge 200). For example, failure messages comprising a specific failure code indicating that latency requirements are not met (e.g. a so-called code 21 indicating that the maximum latency is exceeded), are monitored. The reason is that information about the state of the rest of the network is derived in the 3GPP-SRP Translator 70 (for example, reception of Talker or Listener Declarations with *Statuslnfo*=Failed and *FailureCode*=21 means that the failure reason was that the required latency is exceeded). According to examples of embodiments, such failure messages contain additionally the identity of the entity from where they originate, i.e. *FailedInterface* parameter (it is to be noted that *FailedInterfaces* provides a list of one or more physical interfaces (ports) in the failed bridge or end station). Based on such information, the 3GPP-SRP function 75 can derive a comprehensive overview on the situation in the network and the network capabilities, e.g. which particular bridge on which port(s) failed to provide which latency requirements. Once the Talker Advertise declaration is received at the 3GPP-SRP Translator function 75, the 3GPP-SRP Translator function 75 conducts in S295 an estimation on a suitable latency to be added in the *AccumulatedLatency* field. That is, a latency value caused by the 3GPP network is determined (worst case scenario is considered), wherein this value is then added to the accumulated latency indication being part of the Talker advertise declaration received in S270.

For example, the estimation on the suitable latency to be added in the *AccumulatedLatency* field of declaration is based on
a) the information about available devices (end stations) and their capabilities/requirements as well as stream history (e.g., during setup phase and operational phase), which is available at the Network Management and Orchestration (M&O) functions;
b) a comparison between the maximum latency indication (*MaxLatency)* contained in the declarations from Talker (or from listener) and the corresponding *AccumulatedLatency* values on the 5GS Bridge. It is to be noted that *MaxLatency* value is part of the user to network requirements and thus needs to be satisfied along the path from Talker to Listener, whereas *AccumulatedLatency* represent the worst-case latency that frames or packets would have while being transmitted through the network;
c) information extracted from failure messages (in S290) due to the exceeded latency received from the rest of the network. The bridges on the path from Talker to Listener which cannot satisfy the stream requirements will indicate this by sending the failure message (i.e. changing the Talker/Listener declaration *StatusInfo* to Failed and inserting the failure code, e.g. code 21 for exceeding latency requirements). As indicated above, by collecting this information, the 3GPP-SRP function has an overview on the capabilities of the rest of the network.

It is to be noted that the 3GPP-SRP function (e.g. one or both of 3GPP-SRP functions 65 and 75) is configured to store information about latency values for later usage. In particular, the latency value derived for the 3GPP network and to be added to the previously received accumulated latency indication is stored.

In S298, the Talker Advertise declaration received in S270 is propagated further via the previously determined ports of the 5GS bridge. The Talker Advertise declaration in S298 is updated with regard to the *AccumulatedLatency* field by including the latency value determined in S295.

Thus, the 5GS bridge has propagated the Talker advertise declaration in the TSN network towards the listener side.

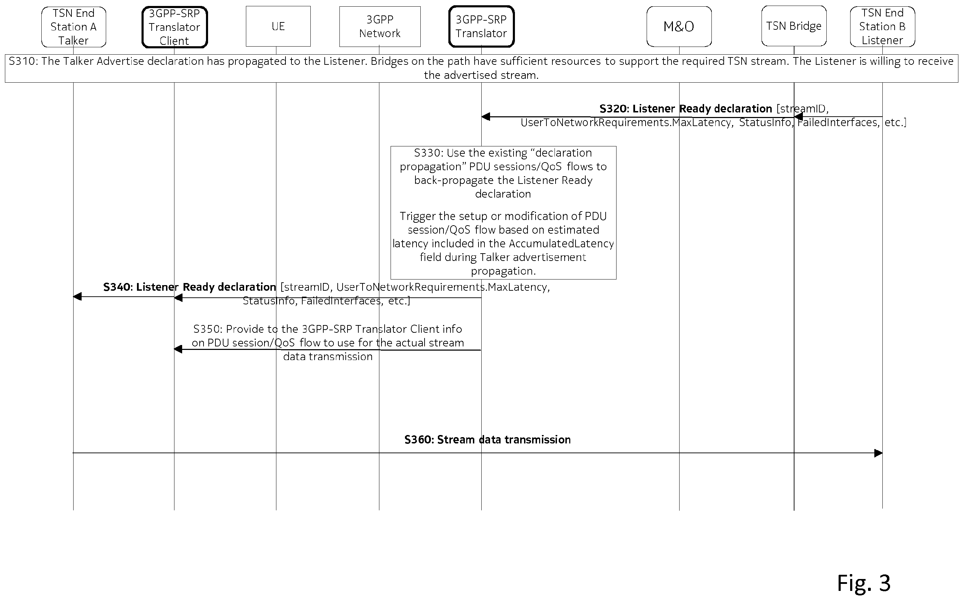

Next, in Fig. 3, a signaling diagram illustrating a further procedure related to propagation of a declaration message according to some examples of embodiments is shown. Specifically, Fig. 3 is related to above indicated point 3, i.e. the setup or modification of PDU sessons/QoS flows.

In S310, the Talker Advertise declaration has been propagated to the Listener. Furthermore, all bridges on the path between Talker and Listener have sufficient resources to support the required TSN stream.

Assuming that the Listener (e.g. TSN end station B 300 of Fig. 1) is interested in receiving the advertised stream (indicated by Talker advertise declaration in S298), then the Listener sends in S320 a Listener Ready declaration back to the Talker. The Listener Ready declaration indicates, for example, the stream ID, UserToNetworkRequirements. MaxLatency, Status information, failed interfaces, etc.

The Bridges on the selected path between Talker and Listener propagate the Listener Ready declaration back through the ports where the corresponding Talker Advertise (with the same stream ID) had been propagated before. During such back-propagation the bridges reserve the required resources for transmission of the stream. Consequently, at this point in time, also the 5GS Bridge reserves the required resources for transmission of the advertised stream.

Specifically, in S330, the 3GPP-SRP Translator function 75 uses the existing declaration propagation PDU sessions/QoS flows to back-propagate the Listener Ready declaration. Furthermore, 3GPP-SRP Translatorfunction 75 triggers the setup or modification of PDU session/QoS flow based on the estimated latency included in the AccumulatedLatency field during Talker advertisement propagation (which is stored, as described above).

In other words, in case the Listener declaration of type Ready (i.e. Listener Ready) message has been received on 5GS Bridge, it means that there was no issue on the path from Talker to Listener to guarantee required resources. Listener requirements match the advertised stream characteristics, e.g. final *AccumulatedLatency* in Talker declaration does not exceed *MaxLatency* in corresponding Listener declaration. In such a case, the 3GPP-SRP Translator function 70, 75 propagates back the Listener Ready declaration via the already established PDU session/QoS flow ("declaration propagation PDU session/QoS flow" already used for Talker declaration propagation) in S340 and triggers in S350, by providing, to the 3GPP-SRP Translator Client, information on PDU session/QoS flow for use for the actual stream data transmission, the modification of already existing PDU session or alternatively a setup of new PDU session/QoS flow with the promised QoS characteristics that will be used for actual stream data transmission in S360.

It is to be noted that according to some examples of embodiments, it is possible that there is a plurality of Listeners willing to receive the same stream. In this case, the 5GS Bridge groups such requests and back-propagates such information in a common message. That is, the 3GPP-SRP function merges several Listener declarations from different ports into a single Listener declaration. The common message is then sent on the egress port which was used for the associated Talker registration (providing the path to the corresponding Talker).

In S360, the actual data stream between the Talker and Listener(s) is started.

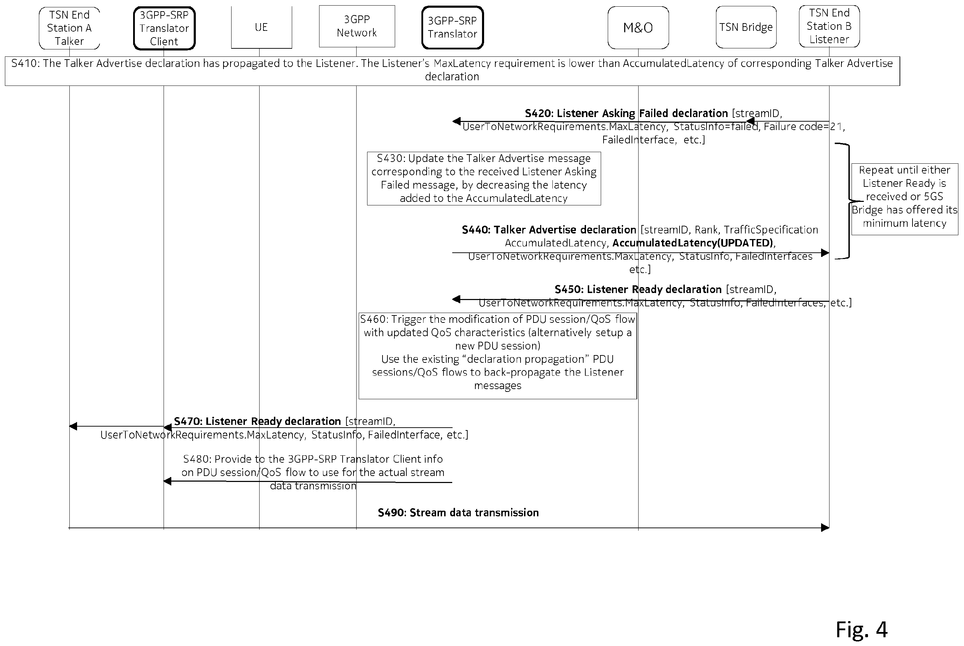

In the following, based on a signaling diagram shown in Fig. 4, a further procedure related to propagation of a declaration message according to some examples of embodiments is explained. Specifically, Fig. 4 is related to above indicated point 4, i.e. the modification of existing (or alternatively offering/setting up of different) PDU sessions/QoS flows within the 5GS Bridge on demand.

In S410, the Talker Advertise declaration has propagated to the Listener (similar to S310). However, in the case according to Fig. 4, the latency requirements cannot be fulfilled. For example, the Listener's MaxLatency requirement is lower than AccumulatedLatency of corresponding Talker Advertise declaration.

That is, since there is a problem on the path between Talker and Listener, a failure message is propagated through the network. For example, in S420, a Listener Asking Failed declaration message including, for example, a stream ID, UserToNetworkRequirements.MaxLatency, status information (=failed), a failure code (e.g. Failure code=21 indicating the exact failure reason), a failed interface indication indicating the entity experiencing the problem, etc. is sent from the Listener side. For example, the message in S420 is sent when *AccumulatedLatency* in a bridge is exceeding the *MaxLatency* of Talker. As another example, latency requirements of the Listener do not match with the *AccumulatedLatency* of corresponding Talker Advertise declaration, in which case the Listener declaration will be changed to Listener Asking Failed, with the *Statuslnfo*=Failed, *FailureCode*=21 and *FailedInterface* indicating the actual entity lacking the resources (exceeding the required latency).

Once such declarations are received by the 5GS Bridge and 3GPP-SRP Translator 70, 75, the corresponding declaration is not immediately propagated further towards the corresponding Talker (or Listeners), which would cause failure of stream transmission.

Instead, in S430, the further propagation is suspended or postponed for a further processing. In detail, it is checked whether the 5GS bridge can provide a QoS flow with better QoS characteristics (i.e. lower latency) than initially reported in the *AccumulatedLatency* included in the Talker advertise declaration, for example, sent in S298 of Fig. 2. In other words, it is checked whether an improved latency value can be provided.

If this is the case, the 3GPP-SRP Translator 70, 75 updates, in S440, the Talker Advertise message corresponding to the received failure message (Talker Failed message or Listener Ready Failed message) by indicating a new (updated) accumulated latency based on the re-calculated latency which can be offered in the 5GS part. That is, the latency added to the *AccumulatedLatency* field is decreased, and a (new) Talker advertise declaration message including the thus updated *AccumulatedLatency* field is sent in S440 along the path towards the Listener (i.e. from where the failure message in S420 is received).

It is to be noted that for this purpose the accumulated latency indicating a latency provided by a signaling path the declaration message had used so far is to be stored. Then, in case of the Listener Ready Failed message is received in S420 and processed as described above, the 5GS bridge knows the accumulated value to determine a reduced latency for updating the indication for the accumulated latency value for the updated declaration message sent to the source of the failure message.

This procedure can be repeated, for example until the decrease of latency does not result in reception of Listener Ready declaration as shown in S420, i.e. in the case that decreased latency satisfies end to end latency requirements of the Talker and Listener.

In such a case, the 5GS Bridge will further handle the Listener Ready declaration as described in connection with Fig. 3, which means that S460 (corresponding to S330), S470 (corresponding to S340) and S480 (corresponding to S350) follow to a reception of a Listener Ready declaration in S450, resulting in a stream data transmission in S490.

Otherwise, if the updating in S430 is not successful, e.g. when the capabilities of 5GS bridge are exhausted, meaning that the 3GPP-SRP Translator has already offered a minimal latency with the best QoS flow capabilities and this still does not result in satisfying the stream requirements (i.e. a failure message as in S420 is continued to be received), the 3GPP-SRP Translator function stops postponement of the propagation of this message, i.e. the Talker Failed or Listener Asking Failed declaration message is propagated further towards the Talker, resulting in that the corresponding stream and QoS flows will not be setup (i.e. S490 does not happen).

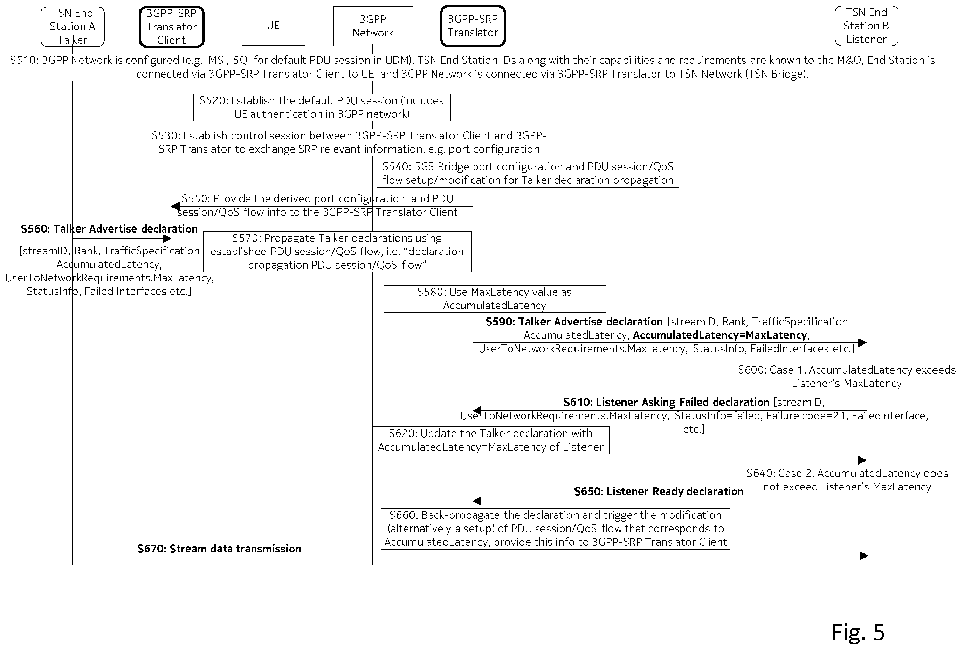

Now, with reference to Fig. 5 showing a further signaling diagram illustrating a procedure related to propagation of a declaration message according to some examples of embodiments, a special case is discussed. Specifically, Fig. 5 is related to a situation where the 5GS bridge is directly connected to a TSN end station (i.e. TSN end station B) representing the Listener party. It is to be noted that similar processing is also applicable for the case where the Talker is connected directly to 5GS Bridge.

In the procedures described above of handling the Talker and Listener declarations in connection with Figs. 2 to 4, it is assumed that at least one additional TSN Bridge exists besides the 5GS Bridge. However, in the case where Talkers/Listeners are connected directly to 5GS Bridge (i.e. there is no other TSN Bridge interposed on the path between Talker and Listener(s)), while the same procedure as described above can be used, it is also possible to use an alternative approach, which is described in the following.

The alternative approach is useful to avoid SRP procedures overhead when only the 5GS Bridge is involved, as illustrated in Fig. 5.

First, the Talker/Listener declarations, such as Talker Advertise and Listener Ready are propagated by using the declaration propagation PDU session/QoS flow as described above. That is, the processing according to S510 corresponds to S210 of Fig. 2, the processing according to S520 corresponds to S220 of Fig. 2,. the processing according to S530 corresponds to S230 of Fig. 2, the processing according to S540 corresponds to S250 of Fig. 2 (based on information as derived in S240 of Fig. 2, for example), the processing according to S550 corresponds to S260 of Fig. 2, the processing according to S560 corresponds to S270 of Fig. 2, and the processing according to S570 corresponds to S280 of Fig. 2, so that a repetition of the respective explanations thereof is omitted here.

However, in the scenario according to Fig. 5, the 5GS Bridge is the only bridge on the path from Talker to Listener(s). Consequently, the *AccumulatedLatency* added to the Talker declarations in the 5GS bridge can be equal to the Talker's maximum latency (*MaxLatency)* requirements. Hence, in S580, if the 3GPP-SRP Translator function 70, 75 knows that there is no further TSN bridge, i.e. the end station is directly connected to the 5GS bridge, it uses the MaxLatency value as Accumulated Latency indication, i.e. the update of the Talker advertise declaration considers the MaxLatency value. By means of this, the 5GS Bridge guarantees the upper bound of latency requirement.

The thus updated Talker advertise declaration is propagated in S590 to the TSN end station B 300 (the Listener), similar to S298 of Fig. 2.

Now, there are assumed two possible cases.

In case 1 (S600), the Listener's *MaxLatency* is assumed to be lower than *AccumulatedLatency* in the Talker Advertise declaration. Thus, a failure message (*ListenerAskingFailed*) is sent back in S610. Once this declaration is received by 3GPP-SRP Translator, a processing similar to that of Fig. 4 can be conducted. That is, the failure message will not be back-propagated towards the Talker. Instead, the 3GPP-SRP Translator checks whether the Listener's *MaxLatency* indicated in the failure message can be provided by the 5GS Bridge. If this is the case, the 3GPP-SRP Translator updates the Talker Advertise declaration setting the *AccumulatedLatency* field equals to Listener's *MaxLatency* in S620.

As a result, Listener Ready declaration message is received (this corresponds to S650) and corresponding procedure for modification (alternatively a setup) of PDU session/QoS flow with guaranteed characteristics can be triggered by 3GPP-SRP Translator (S660). This will be also communicated to 3GPP-SRP Translator Client. Finally, the Talker starts sending the stream data using the established PDU session/QoS stream (S670).

On the other hand, in case 2 (S640), the *AccumulatedLatency* indicated in the updated Talker advertise declaration sent in S590 does not exceed the Listener's latency requirements. Thus, the Listener Ready declaration will be directly sent back towards the Talker in S650. Upon reception of this declaration, the 3GPP-SRP Translator will trigger a setup or modification of corresponding PDU session/QoS flow with the promised *AccumulatedLatency* as packet delay budget (PDB) value (S660). This will be also communicated to 3GPP-SRP Translator Client. Finally, the Talker will start sending the stream data using the established/modified PDU session/QoS flow (S670).

It is to be noted that in case the Listener requirements are already known by the 3GPP-SRP Translator Client in the moment of reception of Talker Advertise declaration in S560 (e.g. Listener declarations have been sent before the corresponding Talker declarations), the knowledge on Talker and Listener requirements regarding a particular stream will be merged already in the first Talker Advertise propagation setting the *AccumulatedLatency* to minimum value from *MaxLatency* of Talker and Listener. This will eliminate the reception of Listener Asking failed declarations, for example.

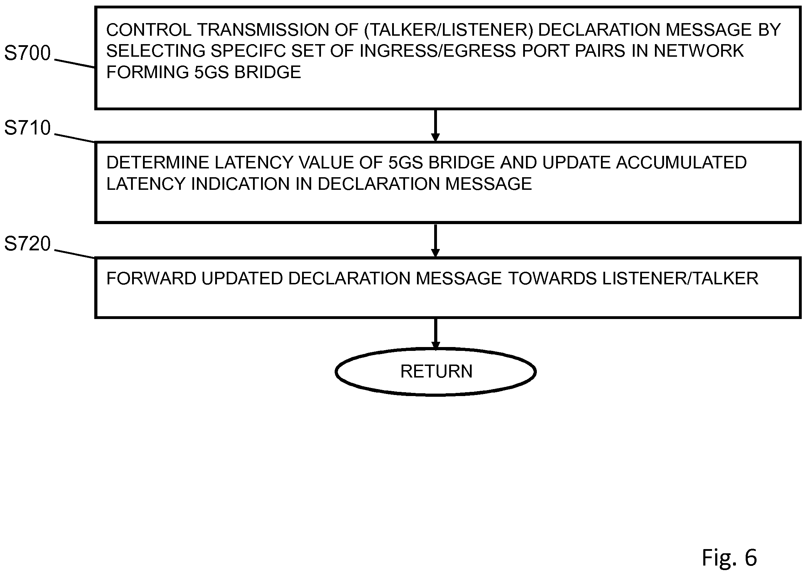

Fig. 6 shows a flow chart of a processing executed by a network element or function acting as a 3GPP-SRP Translator or 3GPP-SRP Translator Client according to some examples of embodiments, which conducts a control processing for enabling transmission of a data stream between a talker and a listener party according to examples of embodiments of the disclosure. According to examples of embodiments, the following procedure is conducted in connection with a wireless communication network, such as a wireless communication network is based on a 3GPP standard.

In S700 a control of transmission of a declaration message related to a stream reservation procedure between the at least one talker party and at least one listener party via a wireless communication network forming a bridge element of a communication system is conducted. Specifically, the control comprises to select at least one specific set of ingress and egress port pairs in the wireless communication network for declaration message propagation. The declaration message comprises an indication for a maximum latency acceptable for the source of the declaration message (e.g. Talker or Listener), and an indication for an accumulated latency indicating a latency provided by a signaling path the declaration message had used so far.

According to some examples of embodiments, control of transmission of the declaration message is conducted by establishing at least one PDU session or QoS flow between end points (i.e. entry and exit points of the wireless network, e.g. TT and TTC) for the at least one talker party side and the at least one listener party side. Alternatively, at least one PDU session or QoS flow between end points in the wireless communication network for the at least one talker party side and the at least one listener party side is modified. Further alternatively, an already established PDU session or QoS flow between end points in the wireless communication network for the at least one talker party side and the at least one listener party side is re-used.

According to some examples of embodiments, information about capabilities of terminal devices (e.g. end stations) providing data to be transmitted between the at least one talker party and the at least one listener party, and/or requirements of the terminal devices providing data to be transmitted between the at least one talker party and the at least one listener party, and/or stream history data regarding setup or operational phase of previous streams to and from terminal devices providing data to be transmitted between the at least one talker party and the at least one listener party is received and processed. According to some examples of embodiments, end stations representing the at least one talker party and the at least one listener party form a subset of the terminal devices. The processed information is then used for establishing or modifying the at least one PDU session or QoS flow between the end points in the wireless communication network for the at least one talker party side and the at least one listener party side.

Moreover, according to some examples of embodiment, the at least one PDU session or QoS flow between the end points in the wireless communication network for the at least one talker party side and the at least one listener party side is specified for propagation of the declaration message (i.e. the resources/setting can be specified for declaration message propagation and be different to e.g. stream transmission settings).

In S710, on the basis of capabilities of resources of the wireless communication network, a latency value representing a worst-case latency for a data transmission via the wireless communication network is determined. On this basis, the indication for the accumulated latency in the declaration message is updated.

It is to be noted that the accumulated latency indicating a latency provided by a signaling path the declaration message had used so far is stored, e.g. for later usage. For example, in case of a Listener Ready Failed message is received (see also Fig. 4), the wireless communication network has to know the accumulated value to determine a reduced latency for updating the indication for the accumulated latency value and to send an updated declaration message to the source of the failure message.

In S720, the declaration message including the updated indication for the accumulated latency is forwarded to the destination (e.g. the Listener).

According to some examples of embodiments, monitoring is conducted as to whether a failure indication message is provided from the side of the at least one talker party and the side of the at least one listener party. The failure indication message indicates that a latency requirement indicated by the declaration message cannot be fulfilled.

Moreover, according to some examples of embodiments, a value for updating the indication for the accumulated latency in the declaration message is determined by using at least one of capabilities of terminal devices (end stations representing the at least one talker party and the at least one listener party form a subset of the terminal devices) providing data to be transmitted between the at least one talker party and the at least one listener party, requirements of terminal devices providing data to be transmitted between the at least one talker party and the at least one listener party, and stream history data regarding setup or operational phase of previous streams to and from devices providing services for data transmission. Furthermore, a comparison between the maximum latency indicated in the declaration message and an accumulated latency value accumulated on the signaling path the declaration message had used so far is conducted. In addition, information based on failure indication messages indicating that a latency requirement indicated by the declaration message cannot be fulfilled is used.

Furthermore, according to some examples of embodiments, in case the at least one talker party and the at least one listener party is directly connected to an end point of the wireless communication network (i.e. the 5GS bridge, for example, is the only bridge on the path from talker to listener), the indication for the accumulated latency in the declaration message is updated by using the maximum latency indicated in the declaration message. The correspondingly updated declaration message is then forwarded.

In addition, according to some examples of embodiments, it is determined that a declaration message from the at least one listener party is provided indicating that the listener intends to receive data offered by the at least one talker party. Then, resources of the wireless communication network, for a PDU session or a QoS flow, required for transmission of the data between the at least one talker party and the at least one listener party are set up or modified.

According to some examples of embodiments, the declaration message from the at least one listener party is forwarded to the at least one talker party by using ports in the wireless communication network which are used for a previous transmission of the declaration message from the at least one talker party to the at least one listener party.

In addition, according to some examples of embodiments, setup or modification of the resources is triggered on the basis of a latency value used for updating an indication of the accumulated latency. Specifically, according to some examples of embodiments, this latency value is added to the accumulated value in the talker declaration for which the 5GS bridge received listener ready declaration. That is, setup or modification of the resources is triggered in case a positive feedback from listener side is received, i.e. the Listener ready declaration, for example.

According to some examples of embodiments, it is determined whether declaration messages from a plurality of listener parties are provided. If the determination is affirmative, the plurality of listener parties are grouped or merged into one common declaration message, and the common declaration message is then forwarded to the at least one talker party side.

Moreover, according to some examples of embodiments, it is determined that a latency requirement of the at least one talker party or the at least one listener party is not fulfilled, e.g. due to a failure message. Then, forwarding of a corresponding declaration message including an indication that the latency requirement is not fulfilled to the at least one talker party is postponed/suspended. It is checked whether a modification of resources of the wireless communication network is possible for reducing a latency caused by the wireless communication network in a data transmission between the at least one talker party and the at least one listener party. In case the check results that such a modification of resources of the wireless communication network is possible, a reduced latency value available in the wireless communication network is determined, and the indication for the accumulated latency in the declaration message is correspondingly updated on the basis of the determined reduced latency value. An updated declaration message including the updated indication for the accumulated latency is sent back to the at least one listener party by which it was indicated that the latency requirement of the at least one talker party or the at least one listener party is not fulfilled. On the other hand, in case the check results that a modification of resources of the wireless communication network is not possible, the declaration message including the indication that the latency requirement is not fulfilled is (finally) forwarded to the at least one talker party.

It is to be noted that the wireless communication network forms a bridge element for a TSN system or Ethernet based networking system, wherein a device forming a mobile terminal element or function or a UE element or function of the wireless communication network represents one end point of the bridge element being connectable with at least one end station or another bridge element of the TSN system or Ethernet based networking system, and a core network element or function of the wireless communication network represents another end point of the bridge element towards another end station or another bridge element of the TSN system or Ethernet based networking system. A network-side translator element or function (e.g. the TT) is connected to or part of a core network element or function of the wireless communication network and a device-side translator element or function (e.g. the TTC) is connected to or part of the device forming a mobile terminal element or function or a UE element or function. The element or function providing the above processing is part of at least one of the network-side translator element or function, the device-side translator element or function, and a core network element or function of the wireless communication network.

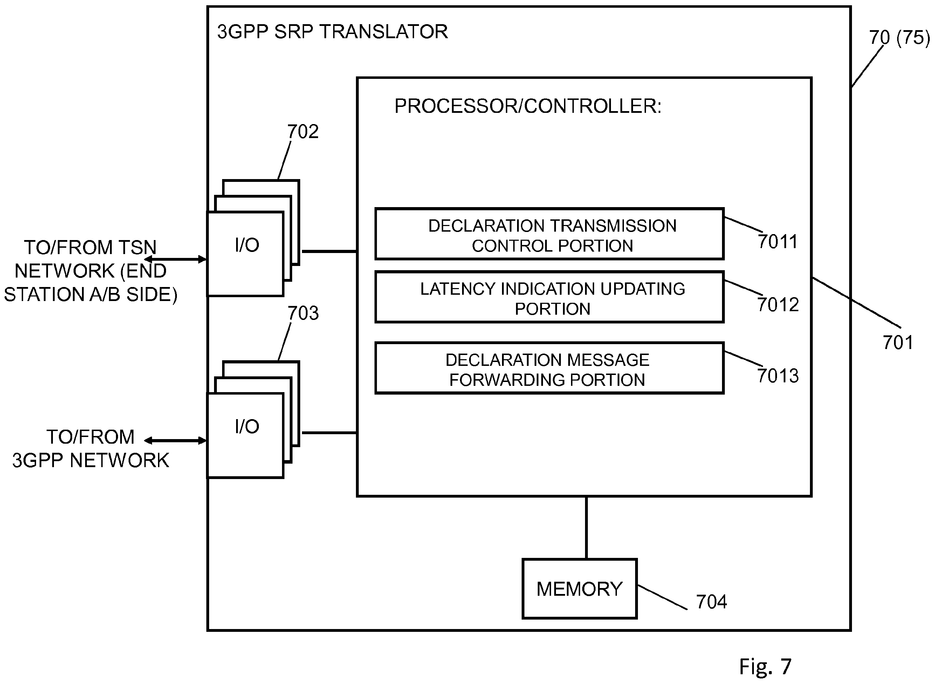

Fig. 7 shows a diagram of a network element or function acting as a 3GPP-SRP Translator or 3GPP-SRP Translator Client according to some examples of embodiments, as described in connection with Figs. 1 to 5, which is configured to conduct a control processing for enabling transmission of a data stream between a talker and a listener party according to examples of embodiments of the disclosure. It is to be noted that the network element or function, like the 3GPP-SRP Translator or 3GPP-SRP Translator Client, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The network element or function 70 shown in Fig. 6 may include a processing circuitry, a processing function, a control unit or a processor 701, such as a CPU or the like, which is suitable for executing instructions given by programs or the like related to the control procedure. The processor 701 may include one or more processing portions orfunctions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 702 and 703 denote input/output (I/O) units or functions (interfaces) connected to the processor or processing function 701. The I/O units 702 may be used for communicating with a TSN network elements, such as end stations or bridges, as described in connection with Figs. 1 to 5, for example. The I/O units 703 may be used for communicating with network elements or functions of the wireless communication network e.g. the 3GPP network, as described in connection with Figs. 1 to 5. The I/O units 702 and 703 may be combined units including communication equipment towards several entities, or may include a distributed structure with a plurality of different interfaces for different entities. Reference sign 704 denotes a memory usable, for example, for storing data and programs to be executed by the processor or processing function 701 and/or as a working storage of the processor or processing function 701. It is to be noted that the memory 704 may be implemented by using one or more memory portions of the same or different type of memory.

The processor or processing function 701 is configured to execute processing related to the above described control processing. In particular, the processor or processing circuitry or function 701 includes one or more of the following sub-portions. Sub-portion 7011 is a processing portion which is usable as a portion for controlling declaration transmission. The portion 7011 may be configured to perform processing according to S700 of Fig. 6. Furthermore, the processor or processing circuitry or function 701 may include a sub-portion 7012 usable as a portion for updating a latency indication. The portion 7012 may be configured to perform a processing according to S710 of Fig. 6. In addition, the processor or processing circuitry or function 701 may include a sub-portion 7013 usable as a portion for forwarding declaration messages. The portion 7013 may be configured to perform a processing according to S720 of Fig. 6.

It is to be noted that examples of embodiments of the disclosure are applicable to various different network configurations.

Furthermore, it is to be noted that while the above described examples are related to the usage of the mechanisms usable for declaration message transmission in connection with a TSN network or system, it is possible to implement corresponding features also in connection with procedures used for other networks related to Ethernet or the like.

According to a further example of embodiments, there is provided, for example, an apparatus for use by a network element or function configured to conduct a control processing for enabling transmission of a data stream between at least one talker party and at least one listener party, the apparatus comprising means configured to conduct control of transmission of a declaration message related to a stream reservation procedure between the at least one talker party and at least one listener party via a wireless communication network forming a bridge element of a communication system, the control comprising selecting at least one specific set of ingress and egress port pairs in the wireless communication network for declaration message propagation, wherein the at least one declaration message comprises an indication for a maximum latency acceptable for the source of the declaration message, and an indication for an accumulated latency indicating a latency provided by a signaling path the declaration message had used so far.

Furthermore, according to some other examples of embodiments, the above defined apparatus may further comprise means for conducting at least one of the processing defined in the above described methods, for example a method according to that described in connection with Fig 6.

According to a further example of embodiments, there is provided, for example, a non-transitory computer readable medium comprising program instructions for causing an apparatus to perform, when conducting a control processing for enabling transmission of a data stream between at least one talker party and at least one listener party, at least the following: conducting control of transmission of a declaration message related to a stream reservation procedure between the at least one talker party and at least one listener party via a wireless communication network forming a bridge element of a communication system, the control comprising selecting at least one specific set of ingress and egress port pairs in the wireless communication network for declaration message propagation, wherein the at least one declaration message comprises an indication for a maximum latency acceptable for the source of the declaration message, and an indication for an accumulated latency indicating a latency provided by a signaling path the declaration message had used so far.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

## Claims

1. An apparatus for use by a network element or function (70) configured to conduct a control
processing for enabling transmission of a data stream between at least one talker party and at least one listener party, the apparatus comprising
at least one processing circuity (701), and
at least one memory (704)
for storing instructions to be executed by the processing circuitry
wherein the at least one memory and the instructions are configured to, with the at least one processing circuitry, cause the apparatus at least:
to conduct control of transmission of a declaration message related to a stream reservation procedure between the at least one talker party and at least one listener party via a wireless communication network forming a bridge element of a communication system (S700), the control comprising selecting at least one specific set of ingress and egress port pairs in the wireless communication network for declaration message propagation, **characterized in that** the at least one declaration message comprises an indication for a maximum latency acceptable for the source of the declaration message, and an indication for an accumulated latency indicating a latency provided by a signaling path the declaration message had used so far (S710).

2. The apparatus according to claim 1, wherein the at least one memory and the instructions are further configured to, with the at least one processing circuitry, cause the apparatus at least:
to conduct control of transmission of the declaration message by one of
establishing at least one packet data unit session or quality of service flow between end points in the wireless communication network for the at least one talker party side and the at least one listener party side,
modifying at least one packet data unit session or quality of service flow between end points in the wireless communication network for the at least one talker party side and the at least one listener party side, and
re-using an already established packet data unit session or quality of service flow between end points in the wireless communication network for the at least one talker party side and the at least one listener party side.

3. The apparatus according to claim 1 or 2, wherein the at least one memory and the instructions are further configured to, with the at least one processing circuitry, cause the apparatus at least:
to receive and process at least one of information about
capabilities of terminal devices providing data to be transmitted between the at least one talker party and the at least one listener party,
requirements of terminal devices providing data to be transmitted between the at least one talker party and the at least one listener party, and
stream history data regarding setup or operational phase of previous streams to and from terminal devices providing data to be transmitted between the at least one
talker party and the at least one listener party,
and
to use the processed information for establishing or modifying the at least one packet data unit session or quality of service flow between the end points in the wireless communication network for the at least one talker party side and the at least one listener party side.

4. The apparatus according to any of claims 1 to 3, wherein the at least one memory and the instructions are further configured to, with the at least one processing circuitry, cause the apparatus at least:
to store the accumulated latency indicating a latency provided by a signaling path the declaration message had used so far
to determine on the basis of capabilities of resources of the wireless communication network a latency value representing a worst-case latency for a data transmission via the wireless communication network,
to update the indication for the accumulated latency in the declaration message on the basis of the determined latency value, and
to forward the declaration message including the updated indication for the accumulated latency.

5. The apparatus according to claim 4, wherein the at least one memory and the instructions are further configured to, with the at least one processing circuitry, cause the apparatus at least:
to monitor whether a failure indication message is provided from the side of the at least one talker party and the side of the at least one listener party, the failure indication message indicating that a latency requirement indicated by the declaration message cannot be fulfilled.

6. The apparatus according to any of claims 1 to 3, wherein the at least one memory and the instructions are further configured to, with the at least one processing circuitry, cause the apparatus at least:
to update, in case the at least one talker party and the at least one listener party is directly connected to an end point of the wireless communication network, the indication for the accumulated latency in the declaration message by using the maximum latency indicated in the declaration message, and
to forward the declaration message including the updated indication for the accumulated latency.

7. The apparatus according to any of claims 1 to 3, wherein the at least one memory and the instructions are further configured to, with the at least one processing circuitry, cause the apparatus at least:
to determine that a declaration message from the at least one listener party is provided indicating that the listener intends to receive data offered by the at least one talker party,
to setup or modify resources of the wireless communication network, for a packed data unit session or a quality of service flow, required for transmission of the data between the at least one talker party and the at least one listener party.

8. The apparatus according to claim 7, wherein the at least one memory and the instructions are further configured to, with the at least one processing circuitry, cause the apparatus at least:
to forward the declaration message from the at least one listener party to the at least one talker party by using ports in the wireless communication network which are used for a previous transmission of the declaration message from the at least one talker party to the at least one listener party.

9. The apparatus according to any of claims 1 to 8, wherein the at least one memory and the instructions are further configured to, with the at least one processing circuitry, cause the apparatus at least:
to determine that a latency requirement of the at least one talker party or the at least one listener party is not fulfilled,
to postpone forwarding of a declaration message including an indication that the latency requirement is not fulfilled to the at least one talker party, and
to check whether a modification of resources of the wireless communication network is possible for reducing a latency caused by the wireless communication network in a data transmission between the at least one talker party and the at least one listener party.

10. A method for use in a network element or function (70) configured to conduct a control processing for enabling transmission of a data stream between at least one talker party and at least one listener party, the method comprising conducting control of transmission of a declaration message related to a stream reservation procedure between the at least one talker party and at least one listener party via a wireless communication network forming a bridge element of a communication system (S700), the control comprising selecting at least one specific set of ingress and egress port pairs in the wireless communication network for declaration message propagation, **characterized in that** the at least one declaration message comprises an indication for a maximum latency acceptable for the source of the declaration message, and an indication for an accumulated latency indicating a latency provided by a signaling path the declaration message had used so far (S710).

11. The method according to claim 10, further comprising
conducting control of transmission of the declaration message by one of
establishing at least one packet data unit session or quality of service flow between end points in the wireless communication network for the at least one talker party side and the at least one listener party side,
modifying at least one packet data unit session or quality of service flow between end points in the wireless communication network for the at least one talker party side and the at least one listener party side, and
re-using an already established packet data unit session or quality of service flow between end points in the wireless communication network for the at least one talker party side and the at least one listener party side.

12. The method according to any of claims 10 to 11, further comprising
storing the accumulated latency indicating a latency provided by a signaling path the declaration message had used so far
determining on the basis of capabilities of resources of the wireless communication network a latency value representing a worst-case latency for a data transmission via the wireless communication network,
updating the indication for the accumulated latency in the declaration message on the basis of the determined latency value, and
forwarding the declaration message including the updated indication for the accumulated latency.

13. The method according to any of claims 10 to 11, further comprising
updating, in case the at least one talker party and the at least one listener party is directly connected to an end point of the wireless communication network, the indication for the accumulated latency in the declaration message by using the maximum latency indicated in the declaration message, and
forwarding the declaration message including the updated indication for the accumulated latency.

14. The method according to any of claims 10 to 13, further comprising
determining that a declaration message from the at least one listener party is provided indicating that the listener intends to receive data offered by the at least one talker party,
setting up or modifying resources of the wireless communication network, for a packed data unit session or a quality of service flow, required for transmission of the data between the at least one talker party and the at least one listener party.

15. A computer program product for a computer, including software code portions for performing the steps of any of claims 10 to 14 when said product is run on the computer.

## Patentansprüche

1. Einrichtung zur Verwendung durch ein Netzwerkelement oder eine Funktion (70), das bzw. die dazu ausgelegt ist, zum Ermöglichen der Übertragung eines Datenstroms zwischen mindestens einer Sprecherpartei und mindestens einer Zuhörerpartei eine Steuerverarbeitung durchzuführen, wobei die Einrichtung Folgendes umfasst
mindestens einen Verarbeitungsschaltung (701), und
mindestens einen Speicher (704) zum Speichern von Anweisungen, die von der Verarbeitungsschaltung auszuführen sind
wobei der mindestens eine Speicher und die Anweisungen dazu ausgelegt sind, die Einrichtung mit der mindestens einen Verarbeitungsschaltung mindestens zu Folgendem zu veranlassen:
Vornehmen einer Steuerung einer Übertragung einer Deklarationsnachricht, die eine Stromreservierungsprozedur betrifft, zwischen der mindestens einen Sprecherpartei und mindestens einer Zuhörerpartei via ein drahtloses Kommunikationsnetzwerk, das ein Brückenelement eines Kommunikationssystems bildet (S700), wobei die Steuerung das Auswählen von mindestens einem spezifischen Satz von Eintritts- und Austrittsanschlusspaaren im drahtlosen Kommunikationsnetzwerk für eine Deklarationsnachrichtenausbreitung umfasst,
**dadurch gekennzeichnet, dass** die mindestens eine Deklarationsnachricht eine Anzeige für eine maximale Latenz, die für die Quelle der Deklarationsnachricht akzeptabel ist, sowie eine Anzeige für eine kumulierte Latenz umfasst, die eine Latenz anzeigt, die durch einen Signalisierungspfad bereitgestellt wird, den die Deklarationsnachricht bisher verwendet hat (S710).

2. Einrichtung nach Anspruch 1, wobei der mindestens eine Speicher und die Anweisungen ferner dazu ausgelegt sind, die Einrichtung mit der mindestens einen Verarbeitungsschaltung zu Folgendem zu veranlassen:
Vornehmen einer Steuerung einer Übertragung der Deklarationsnachricht durch eines von Folgendem
Etablieren von mindestens einer Paketdateneinheitssitzung oder eines Dienstqualitätsstroms zwischen Endpunkten im drahtlosen Kommunikationsnetzwerk für die mindestens eine Sprecherparteiseite und die mindestens eine Zuhörerparteiseite,
Modifizieren von mindestens einer Paketdateneinheitssitzung oder eines Dienstqualitätsstroms zwischen Endpunkten im drahtlosen Kommunikationsnetzwerk für die mindestens eine Sprecherparteiseite und die mindestens eine Zuhörerparteiseite, und
erneutes Verwenden einer bereits etablierten Paketdateneinheitssitzung oder eines bereits etablierten Dienstqualitätsstroms zwischen Endpunkten im drahtlosen Kommunikationsnetzwerk für die mindestens eine Sprecherparteiseite und die mindestens eine Zuhörerparteiseite.

3. Einrichtung nach Anspruch 1 oder 2, wobei der mindestens eine Speicher und die Anweisungen ferner dazu ausgelegt sind, die Einrichtung mit der mindestens einen Verarbeitungsschaltung zu Folgendem zu veranlassen:
Empfangen und Verarbeiten von mindestens einem von Informationen über
Fähigkeiten von Endgerätevorrichtungen, die Daten bereitstellen, die zwischen der mindestens einen Sprecherpartei und der mindestens einen Zuhörerpartei zu übertragen sind,
Anforderungen von Endgerätevorrichtungen, die Daten bereitstellen, die zwischen der mindestens einen Sprecherpartei und der mindestens einen Zuhörerpartei zu übertragen sind, und
Stromverlaufsdaten zum Einrichten oder zu einer Betriebsphase von vorherigen Strömen zu und von Endgerätevorrichtungen, die Daten bereitstellen, die zwischen der mindestens einen Sprecherpartei und der mindestens einen Zuhörerpartei zu übertragen sind,
und
Verwenden der verarbeiteten Informationen zum Etablieren oder Modifizieren der mindestens einen Paketdateneinheitssitzung oder eines Dienstqualitätsstroms zwischen den Endpunkten im drahtlosen Kommunikationsnetzwerk für die mindestens eine Sprecherparteiseite und die mindestens eine Zuhörerparteiseite.

4. Einrichtung nach einem der Ansprüche 1 bis 3, wobei der mindestens eine Speicher und die Anweisungen ferner dazu ausgelegt sind, die Einrichtung mit der mindestens einen Verarbeitungsschaltung zu Folgendem zu veranlassen:
Speichern der kumulierten Latenz, die eine Latenz anzeigt, die durch einen Signalisierungspfad bereitgestellt wird, den die Deklarationsnachricht bisher verwendet hat,
Bestimmen eines Latenzwertes, der eine ungünstigste Latenz für eine Datenübertragung via das drahtlose Kommunikationsnetzwerk repräsentiert, auf Basis von Fähigkeiten von Ressourcen des drahtlosen Kommunikationsnetzwerks,
Aktualisieren der Anzeige für die kumulierte Latenz in der Deklarationsnachricht auf Basis des bestimmten Latenzwertes, und
Weiterleiten der Deklarationsnachricht, die die aktualisierte Anzeige für die kumulierte Latenz beinhaltet.

5. Einrichtung nach Anspruch 4, wobei der mindestens eine Speicher und die Anweisungen ferner dazu ausgelegt sind, die Einrichtung mit der mindestens einen Verarbeitungsschaltung zu Folgendem zu veranlassen:
Überwachen, ob von der Seite der mindestens einen Sprecherpartei und der Seite der mindestens einen Zuhörerpartei eine Fehleranzeigenachricht bereitgestellt wird, wobei die Fehleranzeigenachricht anzeigt, dass eine Latenzanforderung, die durch die Deklarationsnachricht angezeigt wird, nicht erfüllt werden kann.

6. Einrichtung nach einem der Ansprüche 1 bis 3, wobei der mindestens eine Speicher und die Anweisungen ferner dazu ausgelegt sind, die Einrichtung mit der mindestens einen Verarbeitungsschaltung zu Folgendem zu veranlassen:
Aktualisieren der Anzeige für die kumulierte Latenz in der Deklarationsnachricht unter Verwendung der maximalen Latenz, die in der Deklarationsnachricht angezeigt wird, in einem Fall, in dem die mindestens eine Sprecherpartei und die mindestens eine Zuhörerpartei direkt mit einem Endpunkt des drahtlosen Kommunikationsnetzwerks verbunden sind, und
Weiterleiten der Deklarationsnachricht, die die aktualisierte Anzeige für die kumulierte Latenz beinhaltet.

7. Einrichtung nach einem der Ansprüche 1 bis 3, wobei der mindestens eine Speicher und die Anweisungen ferner dazu ausgelegt sind, die Einrichtung mit der mindestens einen Verarbeitungsschaltung zu Folgendem zu veranlassen:
Bestimmen, dass von der mindestens einen Zuhörerpartei eine Deklarationsnachricht bereitgestellt wird, die anzeigt, dass der Zuhörer Daten empfangen möchte, die von der mindestens einen Sprecherpartei angeboten werden,
Einrichten oder Modifizieren von Ressourcen des drahtlosen Kommunikationsnetzwerks für eine gepackte Dateneinheitssitzung oder einen Dienstqualitätsstrom, die für eine Übertragung der Daten zwischen der mindestens einen Sprecherpartei und der mindestens einen Zuhörerpartei erforderlich sind.

8. Einrichtung nach Anspruch 7, wobei der mindestens eine Speicher und die Anweisungen ferner dazu ausgelegt sind, die Einrichtung mit der mindestens einen Verarbeitungsschaltung zu Folgendem zu veranlassen:
Weiterleiten der Deklarationsnachricht von der mindestens einen Zuhörerpartei zu der mindestens einen Sprecherpartei unter Verwendung von Anschlüssen im drahtlosen Kommunikationsnetzwerk, die für eine vorherige Übertragung der Deklarationsnachricht von der mindestens einen Sprecherpartei zu der mindestens einen Zuhörerpartei verwendet wurden.

9. Einrichtung nach einem der Ansprüche 1 bis 8, wobei der mindestens eine Speicher und die Anweisungen ferner dazu ausgelegt sind, die Einrichtung mit der mindestens einen Verarbeitungsschaltung zu Folgendem zu veranlassen:
Bestimmen, dass eine Latenzanforderung der mindestens einen Sprecherpartei oder der mindestens einen Zuhörerpartei nicht erfüllt ist,
Verschieben des Weiterleitens einer Deklarationsnachricht, die eine Anzeige beinhaltet, dass die Latenzanforderung nicht erfüllt ist, zu der mindestens einen Sprecherpartei, und
Prüfen, ob eine Modifikation von Ressourcen des drahtlosen Kommunikationsnetzwerks zur Reduktion einer Latenz, die vom drahtlosen Kommunikationsnetzwerk verursacht wurde, bei einer Datenübertragung zwischen der mindestens einen Sprecherpartei und der mindestens einen Zuhörerpartei möglich ist.

10. Verfahren zur Verwendung in einem Netzwerkelement oder einer Funktion (70), das bzw. die dazu ausgelegt ist, zum Ermöglichen der Übertragung eines Datenstroms zwischen mindestens einer Sprecherpartei und mindestens einer Zuhörerpartei eine Steuerverarbeitung durchzuführen, wobei das Verfahren Folgendes umfasst
Vornehmen einer Steuerung einer Übertragung einer Deklarationsnachricht, die eine Stromreservierungsprozedur betrifft, zwischen der mindestens einen Sprecherpartei und mindestens einer Zuhörerpartei via ein drahtloses Kommunikationsnetzwerk, das ein Brückenelement eines Kommunikationssystems bildet (S700), wobei die Steuerung das Auswählen von mindestens einem spezifischen Satz von Eintritts- und Austrittsanschlusspaaren im drahtlosen Kommunikationsnetzwerk für eine Deklarationsnachrichtenausbreitung umfasst,
**dadurch gekennzeichnet, dass** die mindestens eine Deklarationsnachricht eine Anzeige für eine maximale Latenz, die für die Quelle der Deklarationsnachricht akzeptabel ist, sowie eine Anzeige für eine kumulierte Latenz umfasst, die eine Latenz anzeigt, die durch einen Signalisierungspfad bereitgestellt wird, den die Deklarationsnachricht bisher verwendet hat (S710).

11. Verfahren nach Anspruch 10, das ferner Folgendes umfasst
Vornehmen einer Steuerung einer Übertragung der Deklarationsnachricht durch eines von Folgendem
Etablieren von mindestens einer Paketdateneinheitssitzung oder eines Dienstqualitätsstroms zwischen Endpunkten im drahtlosen Kommunikationsnetzwerk für die mindestens eine Sprecherparteiseite und die mindestens eine Zuhörerparteiseite,
Modifizieren von mindestens einer Paketdateneinheitssitzung oder eines Dienstqualitätsstroms zwischen Endpunkten im drahtlosen Kommunikationsnetzwerk für die mindestens eine Sprecherparteiseite und die mindestens eine Zuhörerparteiseite, und
erneutes Verwenden einer bereits etablierten Paketdateneinheitssitzung oder eines bereits etablierten Dienstqualitätsstroms zwischen Endpunkten im drahtlosen Kommunikationsnetzwerk für die mindestens eine Sprecherparteiseite und die mindestens eine Zuhörerparteiseite.

12. Verfahren nach einem der Ansprüche 10 bis 11, das ferner Folgendes umfasst
Speichern der kumulierten Latenz, die eine Latenz anzeigt, die durch einen Signalisierungspfad bereitgestellt wird, den die Deklarationsnachricht bisher verwendet hat,
Bestimmen eines Latenzwertes, der eine ungünstigste Latenz für eine Datenübertragung via das drahtlose Kommunikationsnetzwerk repräsentiert, auf Basis von Fähigkeiten von Ressourcen des drahtlosen Kommunikationsnetzwerks,
Aktualisieren der Anzeige für die kumulierte Latenz in der Deklarationsnachricht auf Basis des bestimmten Latenzwertes, und
Weiterleiten der Deklarationsnachricht, die die aktualisierte Anzeige für die kumulierte Latenz beinhaltet.

13. Verfahren nach einem der Ansprüche 10 bis 11, das ferner Folgendes umfasst
Aktualisieren der Anzeige für die kumulierte Latenz in der Deklarationsnachricht unter Verwendung der maximalen Latenz, die in der Deklarationsnachricht angezeigt wird, in einem Fall, in dem die mindestens eine Sprecherpartei und die mindestens eine Zuhörerpartei direkt mit einem Endpunkt des drahtlosen Kommunikationsnetzwerks verbunden sind, und
Weiterleiten der Deklarationsnachricht, die die aktualisierte Anzeige für die kumulierte Latenz beinhaltet.

14. Verfahren nach einem der Ansprüche 10 bis 13, das ferner Folgendes umfasst
Bestimmen, dass von der mindestens einen Zuhörerpartei eine Deklarationsnachricht bereitgestellt wird, die anzeigt, dass der Zuhörer Daten empfangen möchte, die von der mindestens einen Sprecherpartei angeboten werden,
Einrichten oder Modifizieren von Ressourcen des drahtlosen Kommunikationsnetzwerks für eine gepackte Dateneinheitssitzung oder einen Dienstqualitätsstrom, die für eine Übertragung der Daten zwischen der mindestens einen Sprecherpartei und der mindestens einen Zuhörerpartei erforderlich sind.

15. Computerprogrammprodukt für einen Computer, das Softwarecodeabschnitte zum Durchführen der Schritte von einem der Ansprüche 10 bis 14, wenn das Produkt auf dem Computer läuft, beinhaltet.

## Revendications

1. Appareil destiné à être utilisé par un élément de réseau ou une fonction (70), configuré pour mener un traitement de commande afin de permettre la transmission d'un flux de données entre au moins une partie émettrice et au moins une partie réceptrice, l'appareil comprenant
au moins une circuiterie de traitement (701), et
au moins une mémoire (704) pour stocker des instructions à exécuter par la circuiterie de traitement,
dans lequel la au moins une mémoire et les instructions sont configurées pour, avec la au moins une circuiterie de traitement, amener l'appareil au moins :
à mener une commande de transmission d'un message de déclaration relatif à une procédure de réservation de flux entre la au moins une partie émettrice et la au moins une partie réceptrice via un réseau de communication sans fil formant un élément de pont d'un système de communication (S700), la commande comprenant la sélection d'au moins un jeu spécifique de paires de ports d'entrée et de sortie dans le réseau de communication sans fil pour la propagation de message de déclaration, **caractérisé en ce que**
le au moins un message de déclaration comprend une indication d'un temps de latence maximal acceptable pour la source du message de déclaration, et une indication d'un temps de latence cumulé indiquant un temps de latence prévu par un chemin de signalisation que le message de déclaration a utilisé jusqu'à présent (S710).

2. Appareil selon la revendication 1, dans lequel la au moins une mémoire et les instructions sont en outre configurées pour, avec la au moins une circuiterie de traitement, amener l'appareil au moins :
à mener une commande de transmission du message de déclaration en effectuant l'une des étapes suivantes :
établir au moins une session d'unité de données par paquets ou un flux de qualité de service entre des points d'extrémité dans le réseau de communication sans fil pour le côté au moins une partie émettrice et le côté au moins une partie réceptrice,
modifier au moins une session d'unité de données par paquets ou un flux de qualité de service entre des points d'extrémité dans le réseau de communication sans fil pour le côté au moins une partie émettrice et le côté au moins une partie réceptrice, et
réutiliser une session d'unité de données par paquets ou un flux de qualité de service déjà établis entre des points d'extrémité dans le réseau de communication sans fil pour le côté au moins une partie émettrice et le côté au moins une partie réceptrice.

3. Appareil selon la revendication 1 ou 2, dans lequel la au moins une mémoire et les instructions sont en outre configurées pour, avec la au moins une circuiterie de traitement, amener l'appareil au moins :
à recevoir et à traiter au moins l'une des informations concernant
des capacités de dispositifs terminaux fournissant des données à transmettre entre la au moins une partie émettrice et la au moins une partie réceptrice,
des exigences de dispositifs terminaux fournissant des données à transmettre entre la au moins une partie émettrice et la au moins une partie réceptrice, et
des données d'historique de flux concernant la configuration ou la phase opérationnelle de flux précédents vers et depuis des dispositifs terminaux fournissant des données à transmettre entre la au moins une partie émettrice et la au moins une partie réceptrice,
et
à utiliser les informations traitées pour établir ou modifier la au moins une session d'unité de données par paquets ou un flux de qualité de service entre le points d'extrémité dans le réseau de communication sans fil pour le côté au moins une partie émettrice et le côté au moins une partie réceptrice.

4. Appareil selon l'une des revendications 1 à 3, dans lequel la au moins une mémoire et les instructions sont en outre configurées pour, avec la au moins une circuiterie de traitement, amener l'appareil au moins :
à stocker le temps de latence cumulé indiquant un temps de latence prévu par un chemin de signalisation que le message de déclaration a utilisé jusqu'à présent,
à déterminer, sur la base de capacités de ressources du réseau de communication sans fil, une valeur de temps de latence représentant un temps de latence le plus défavorable pour une transmission de données via le réseau de communication sans fil,
à mettre à jour l'indication du temps de latence cumulé dans le message de déclaration sur la base de la valeur de temps de latence déterminé, et
à transférer le message de déclaration comportant l'indication mise à jour pour le temps de latence cumulé.

5. Appareil selon la revendication 4, dans lequel la au moins une mémoire et les instructions sont en outre configurées pour, avec la au moins une circuiterie de traitement, amener l'appareil au moins :
à surveiller si un message d'indication d'échec est fourni du côté de la au moins une partie émettrice et du côté de la au moins une partie réceptrice, le message d'indication d'échec indiquant qu'une exigence de temps de latence indiquée par le message de déclaration ne peut pas être satisfaite.

6. Appareil selon l'une des revendications 1 à 3, dans lequel la au moins une mémoire et les instructions sont en outre configurées pour, avec la au moins une circuiterie de traitement, amener l'appareil au moins :
à mettre à jour, dans le cas où la au moins une partie émettrice et la au moins une partie réceptrice sont directement connectés à un point d'extrémité du réseau de communication sans fil, l'indication du temps de latence cumulé dans le message de déclaration en utilisant le temps de latence maximal indiqué dans le message de déclaration, et
à transférer le message de déclaration comportant l'indication mise à jour pour le temps de latence cumulé.

7. Appareil selon l'une des revendications 1 à 3, dans lequel la au moins une mémoire et les instructions sont en outre configurées pour, avec la au moins une circuiterie de traitement, amener l'appareil au moins :
à déterminer qu'un message de déclaration provenant de la au moins une partie réceptrice est fourni et qu'il indique que la partie réceptrice a l'intention de recevoir des données offertes par la au moins une partie émettrice,
à configurer ou à modifier des ressources du réseau de communication sans fil pour une session d'unité de données condensées ou un flux de qualité de service nécessaires à la transmission des données entre la au moins une partie émettrice et la au moins une partie réceptrice.

8. Appareil selon la revendication 7, dans lequel la au moins une mémoire et les instructions sont en outre configurées pour, avec la au moins une circuiterie de traitement, amener l'appareil au moins :
à transférer le message de déclaration provenant de la au moins une partie réceptrice à la au moins une partie émettrice en utilisant des ports dans le réseau de communication sans fil qui sont utilisés pour une transmission précédente du message de déclaration de la au moins une partie émettrice à la au moins une partie réceptrice.

9. Appareil selon l'une des revendications 1 à 8, dans lequel la au moins une mémoire et les instructions sont en outre configurées pour, avec la au moins une circuiterie de traitement, amener l'appareil au moins :
à déterminer qu'une exigence de temps de latence de la au moins une partie émettrice ou de la au moins une partie réceptrice n'est pas satisfaite,
à reporter le transfert d'un message de déclaration comportant une indication selon laquelle l'exigence de temps de latence n'est pas satisfaite à la au moins une partie émettrice, et
à vérifier si une modification de ressources du réseau de communication sans fil est possible pour réduire un temps de latence causé par le réseau de communication sans fil dans une transmission de données entre la au moins une partie émettrice et la au moins une partie réceptrice.

10. Procédé pour utiliser dans un élément de réseau ou une fonction (70) configuré pour mener un traitement de commande afin de permettre la transmission d'un flux de données entre au moins une partie émettrice et au moins une partie réceptrice, le procédé comprenant
la réalisation d'une commande de transmission d'un message de déclaration relatif à une procédure de réservation de flux entre la au moins une partie émettrice et la au moins une partie réceptrice via un réseau de communication sans fil formant un élément de pont d'un système de communication (S700),
la commande comprenant la sélection d'au moins un jeu spécifique de paires de ports d'entrée et de sortie dans le réseau de communication sans fil pour la propagation de message de déclaration, **caractérisé en ce que** le au moins un message de déclaration comprend une indication d'un temps de latence maximal acceptable pour la source du message de déclaration, et une indication d'un temps de latence cumulé indiquant un temps de latence prévu par un chemin de signalisation que le message de déclaration a utilisé jusqu'à présent (S710).

11. Procédé selon la revendication 10, comprenant en outre
la réalisation d'une commande de transmission du message de déclaration en effectuant l'une des étapes suivantes :
établir au moins une session d'unité de données par paquets ou un flux de qualité de service entre des points d'extrémité dans le réseau de communication sans fil pour le côté au moins une partie émettrice et le côté au moins une partie réceptrice,
modifier au moins une session d'unité de données par paquets ou un flux de qualité de service entre des points d'extrémité dans le réseau de communication sans fil pour le côté au moins une partie émettrice et le côté au moins une partie réceptrice, et
réutiliser une session d'unité de données par paquets ou un flux de qualité de service déjà établis entre des points d'extrémité dans le réseau de communication sans fil pour le côté au moins une partie émettrice et le côté au moins une partie réceptrice.

12. Procédé selon l'une des revendications 10 à 11, comprenant en outre
le stockage du temps de latence cumulé indiquant un temps de latence prévu par un chemin de signalisation que le message de déclaration a utilisé jusqu'à présent,
la détermination, sur la base de capacités de ressources du réseau de communication sans fil, d'une valeur de temps de latence représentant un temps de latence le plus défavorable pour une transmission de données via le réseau de communication sans fil,
la mise à jour de l'indication du temps de latence cumulé dans le message de déclaration sur la base de la valeur de temps de latence déterminé, et
le transfert du message de déclaration comportant l'indication mise à jour pour le temps de latence cumulé.

13. Procédé selon l'une des revendications 10 à 11, comprenant en outre
la mise à jour, dans le cas où la au moins une partie émettrice et la au moins une partie réceptrice sont directement connectés à un point d'extrémité du réseau de communication sans fil, de l'indication du temps de latence cumulé dans le message de déclaration en utilisant le temps de latence maximal indiqué dans le message de déclaration, et
le transfert du message de déclaration comportant l'indication mise à jour pour le temps de latence cumulé.

14. Procédé selon l'une des revendications 10 à 13, comprenant en outre
la détermination du fait qu'un message de déclaration provenant de la au moins une partie réceptrice est fourni et qu'il indique que la partie réceptrice a l'intention de recevoir des données offertes par la au moins une partie émettrice,
la configuration ou la modification de ressources du réseau de communication sans fil pour une session d'unité de données condensées ou un flux de qualité de service nécessaires à la transmission des données entre la au moins une partie émettrice et la au moins une partie réceptrice.

15. Produit de programme informatique pour un ordinateur, comportant des portions de code logiciel pour réaliser les étapes selon l'une des revendications 10 à 14 lorsque ledit produit est exécuté sur l'ordinateur.
